# EUROPEAN PATENT APPLICATION

(11) **EP 1 545 086 A2**
(43) Date of publication of application: **22.06.2005**
(21) Application number: 04026873.2
(22) Date of filing: 11.11.2004
(51) Int. Cl.: H04L 29/06

(54) **Method for policy-based firewall service management**

(30) Priority: 19.12.2003 US 740748
(71) Applicant: MICROSOFT CORPORATION, Redmond, Washington 98052 (US)
(72) Inventor: Qian, Tin, Washington 98008 (US); Gavrilescu, Alexandru, Washington 90853 (US)
(74) Representative: Grünecker, Kinkeldey, Stockmair & Schwanhäusser Anwaltssozietät

(57) **Abstract**

An object model (300) is provided as a general framework for managing network services, such as firewall services (302). A user or an administrator of a computer (102) may utilize the object model (300) to manage and configure the firewall services. The object model isolates a user and/or an administrator from having to deal with the many possible issues involved in configuring the services. The object model (300) includes two main name spaces: a policy engine platform (310) and a policy object model (312). The policy engine platform (310) is the central point for interacting with the policy (308) for the services and the kernel components (314) that actually perform the services. The policy object model (312) is used to specify policies that the services support.

## Description

### TECHNICAL FIELD OF THE INVENTION

The present invention is generally related to security on a computer or network, and is more specifically related to firewalls and their management.

### BACKGROUND OF THE INVENTION

In general, a firewall is an electronic boundary that prevents unauthorized users from accessing certain files on a network or a computer. A firewall may be provided as firewall code on a user's computer ("host firewall"). Alternatively, a dedicated firewall machine may be provided at the edge of a network ("edge firewall") that interfaces with computers outside the network and has special security precautions built into it in order to protect sensitive files on computers within the network. The idea is to protect a cluster of more loosely administered machines hidden behind the edge firewall from computer users outside of the network. The machine on which the edge firewall is located is often referred to as a "gateway" or a "dedicated gateway." If configured to protect a network from the Internet, the machine is often referred to as an "Internet Gateway Device."

Firewalls use one or more of at least three different security measures to control traffic flowing in and out of a network. In a first method, called static packet filtering, packets are analyzed against a set of filters. Packets approved by the filters are sent to the requesting system; all others are discarded. In a second method, called proxy service, information from the Internet is retrieved by the firewall, evaluated against a policy, and then sent to the requesting system, and vice versa. In a third, newer method, called stateful inspection, the contents of a packet are not examined, but instead key parts of the packet are compared to a database of trusted information. Information traveling from inside the firewall to the outside is monitored for special defining characteristics, and then incoming information is compared to these characteristics. If the comparison yields a reasonable match, the information is allowed through. Otherwise it is discarded. Other traffic controls may be utilized, and the above three are given as examples.

Firewalls are often customizable, meaning, for example, that filters may be added or removed based upon several conditions. For example, Internet Protocol ("IP") addresses may be used to restrict or block traffic. If so, in one example, if a certain IP address outside the network is reading too many files from a server, a firewall can block all traffic to and/or from that address. As another example, a firewall may block all access to certain domain names, or allow access to only specific domain names. As still another example, a company might set up a network with only one or two machines to handle a specific protocol or protocols and ban those protocols on all other machines. Still another example is using ports to restrict traffic. For example, if a server machine is running a Web (HTTP) server and an FTP server, the Web server would typically be available on port 80, and the FTP server would be available on port 21. A company might block port 21 access on all machines but one on a network.

Thus, a firewall ensures security by reviewing network communications and only allowing communications that are consistent with a policy that has been set within the firewall services of the firewall. While the traffic control methods described above work well for filtering traffic, managing a firewall may be difficult. For example, a user may want to set particular access policies for a machine, but may have no understanding of ports, packets, and/or filters. Contemporary methods used for specifying firewall policies that configure the firewall are often unintuitive, and/or may require an in-depth knowledge of networking protocols and implementations.

### SUMMARY OF THE INVENTION

The following presents a simplified summary of some embodiments of the invention in order to provide a basic understanding of the invention. This summary is not an extensive overview of the invention. It is not intended to identify key/critical elements of the invention or to delineate the scope of the invention. Its sole purpose is to present some embodiments of the invention in a simplified form as a prelude to the more detailed description that is presented later.

In accordance with an embodiment of the invention, an object model is provided as a general framework for managing network services, such as firewall services, network quality of service, parental control, and network intrusion detection, as nonlimiting examples.

A user or an administrator of a computer may utilize the object model to manage the services. For example, a user may access a user interface which accesses the object model and through which the user may set policy for the services. In addition, the object model may be accessed by a remote management tool, for example by a network administrator. In this manner, the object model may be used to remotely set policies for the services, and a single administrator may manage the services of many computers.

The object model isolates a user and/or an administrator from having to deal with the many possible issues involved in configuring the services. The object model includes two main name spaces: a policy engine platform and a policy object model. The policy engine platform is the central point for interacting with the policy for the services and the kernel components that actually perform the services. The policy engine platform performs the acts of establishing policy and plumbing the policy to the platform kernel components.

The policy object model is used to specify policies that the services support. The policy object model permits an advanced user to define traditional packet-centric type filtering policy, or a less advanced user to develop policy using more simplified rules based upon an application using the services and a user of the application.

Other features of the invention will become apparent from the following detailed description when taken in conjunction with the drawings, in which:

### BRIEF DESCRIPTION OF THE DRAWINGS

FIG. 1 is a schematic diagram illustrating computers connected by a network;

FIG. 2 is a schematic diagram generally illustrating an exemplary computer system usable to implement an embodiment of the invention;

FIG. 3 is a block diagram illustrating details of an architecture for the computer system of FIG. 2 that may be used in accordance with an embodiment of the invention;

FIG. 4 is a diagram generally representing firewall service objects that may be produced in accordance with an embodiment of the firewall policy object model;

FIG. 5 shows an example of five different base abstract firewall policy objects that are derived from a policy object in accordance with an embodiment of the invention;

FIG. 6 shows a number of different policy condition classes that may derived from a policy condition object in accordance with an embodiment of the present invention;

FIG. 7 shows a number of different policy action classes that may derived from a policy action object in accordance with an embodiment of the present invention;

FIG. 8 is a block diagram generally representing classes of a firewall policy engine platform in accordance with an embodiment of the invention;

FIG. 9 shows more detail regarding the classes shown in FIG. 8;

FIG. 10 is a flow diagram generally representing steps for creating, editing or deleting a policy rule utilizing a RuleEditor object in accordance with an embodiment of the invention;

FIG. 11 is a flow diagram generally representing steps for creating a policy rule utilizing a SettingEditor object in accordance with an embodiment of the invention; and

FIG. 12 is a flow diagram generally representing steps for viewing policy rules utilizing a RuleExplorer object in accordance with an embodiment of the invention.

### DETAILED DESCRIPTION

In the following description, various embodiments of the present invention will be described. For purposes of explanation, specific configurations and details are set forth in order to provide a thorough understanding of the embodiments. However, it will also be apparent to one skilled in the art that the present invention may be practiced without the specific details. Furthermore, well-known features may be omitted or simplified in order not to obscure the embodiment being described.

Prior to proceeding with a description of the various embodiments of the invention, a description of a computer and networking environment in which the various embodiments of the invention may be practiced is now provided. Although not required, the invention will be described in the general context of computer-executable instructions, such as program modules, being executed by a computer. Generally, programs include routines, objects, components, data structures and the like that perform particular tasks or implement particular abstract data types. The terms "program" or "module" as used herein may connote a single program module or multiple program modules acting in concert. The terms "computer" and "computing device" as used herein include any device that electronically executes one or more programs, such as personal computers (PCs), hand-held devices, multi-processor systems, microprocessor-based programmable consumer electronics, network PCs, minicomputers, tablet PCs, laptop computers, consumer appliances having a microprocessor or microcontroller, routers, gateways, hubs and the like. The invention may also be employed in distributed computing environments, where tasks are performed by remote processing devices that are linked through a communications network. In a distributed computing environment, programs may be located in both local and remote memory storage devices.

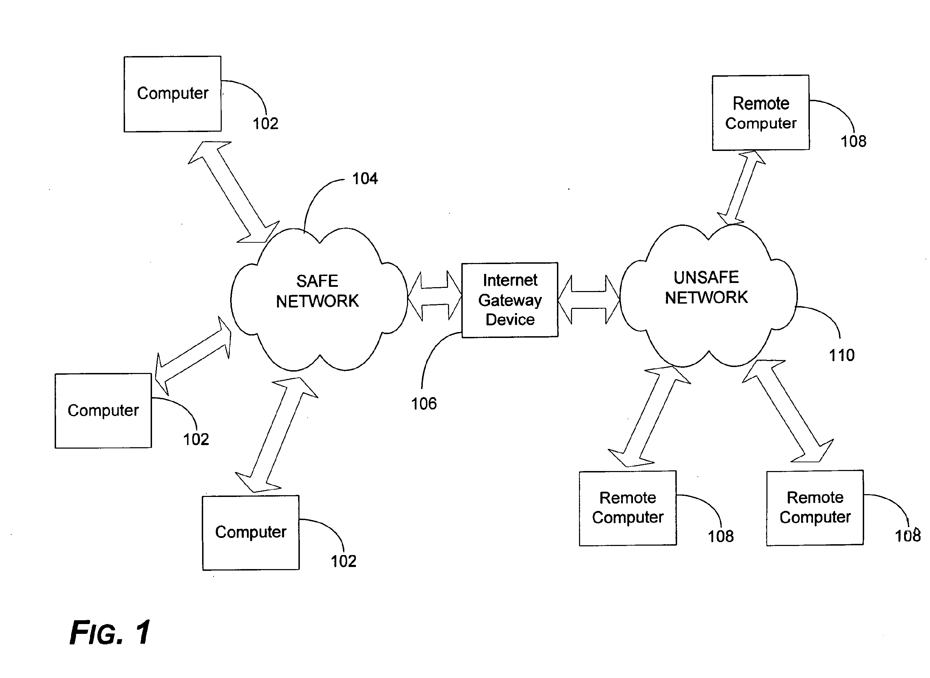

An example of a computer networking environment suitable for incorporating aspects of the invention is described with reference to FIG. 1. The example computer networking environment includes several computers 102 communicating with one another over a safe network 104, indicated by a cloud. The safe network 104 may include many well-known components, such as routers, gateways, hubs, etc. and allows the computers 102 to communicate via wired and/or wireless media. When interacting with one another over the safe network 104, one or more of the computers 102 may act as clients, servers or peers with respect to other computers 102. Accordingly, the various embodiments of the invention may be practiced on clients, servers, peers or combinations thereof, even though specific examples contained herein may not refer to all of these types of computers.

The safe network 104 in this example is considered a "safe" network, in that the computers 102 are protected by a common firewall, in the example shown as an Internet gateway device 106. The Internet gateway device 106 protects the computers 102 from remote computers 108 located on a public or unsafe network 110, in the example shown by a cloud. Although described as an Internet gateway device 106, the gateway device may protect the safe network from other types of unsafe networks, not necessarily the Internet, including a LAN, a WAN, or another network.

Although shown as having multiple computers, the safe network 104 may include only a single computer 102. In addition, although the unsafe network 110 is shown as having multiple remote computers 108, it may instead have only one. Further, although the network shown in FIG. 1 includes both the safe network 104 and the unsafe network 110, a computer, such as one of the computers 102, may connect directly to the unsafe network 110, with or without a safe network 104 and/or the Internet gateway device 106.

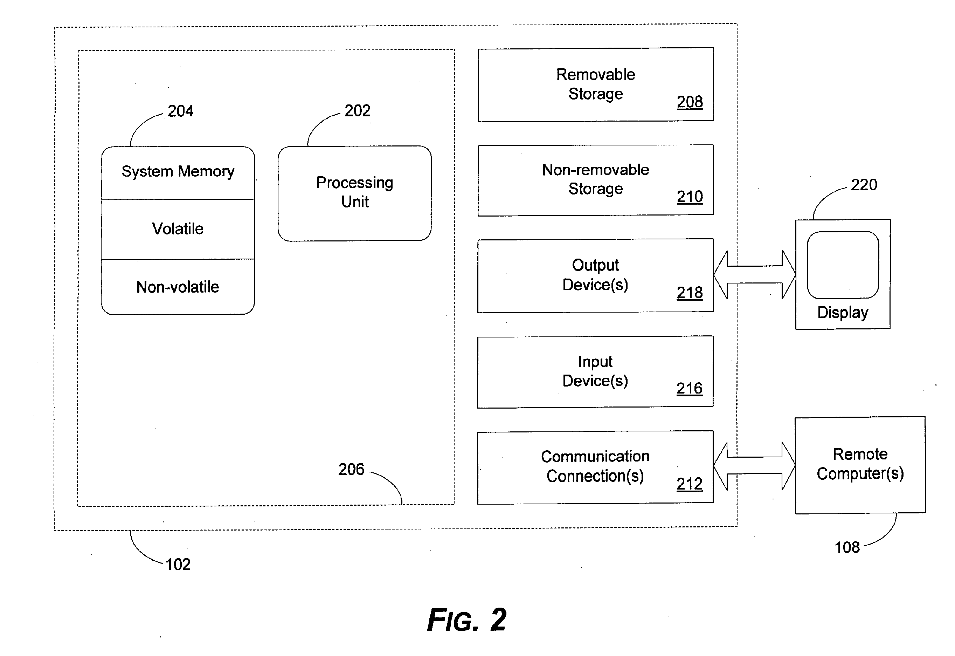

Referring to FIG. 2, an example of a basic configuration for the computer 102 on which embodiments of the invention described herein may be implemented is shown. This basic configuration may also be used for the Internet gateway device 106. For ease of description, however, embodiments of the invention will be described typically with reference to the computer 102.

In its most basic configuration, the computer 102 typically includes at least one processing unit 202 and memory 204. The processing unit 202 executes instructions to carry out tasks in accordance with various embodiments of the invention. In carrying out such tasks, the processing unit 202 may transmit electronic signals to other parts of the computer 102 and to devices outside of the computer 102 to cause some result. Depending on the exact configuration and type of the computer 102, the memory 204 may be volatile (such as RAM), non-volatile (such as ROM or flash memory), or some combination of the two. This most basic configuration is illustrated in FIG. 2 by dashed line 206.

The computer 102 may also have additional features/functionality. For example, the computer 102 may also include additional storage (removable 208 and/or non-removable 210) including, but not limited to, magnetic or optical disks or tape. Computer storage media includes volatile and non-volatile, removable and non-removable media implemented in any method or technology for storage of information, including computer-executable instructions, data structures, program modules, or other data. Computer storage media includes, but is not limited to, RAM, ROM, EEPROM, flash memory, CD-ROM, digital versatile disk (DVD) or other optical storage, magnetic cassettes, magnetic tape, magnetic disk storage or other magnetic storage devices, or any other medium which can be used to stored the desired information and which can be accessed by the computer 102. Any such computer storage media may be part of computer 102.

The computer 102 preferably also contains communications connections 212 that allow the device to communicate with other devices, such as other computers 102 on the safe network 104, or remote computers 108 on the unsafe network 110 (only a single remote computer 108 is shown in FIG. 2). A communication connection is an example of a communication medium. Communication media typically embody computer readable instructions, data structures, program modules, or other data in a modulated data signal such as a carrier wave or other transport mechanism and include any information delivery media. By way of example, and not limitation, the term "communication media" includes wireless media such as acoustic, RF, infrared and other wireless media. The term "computer-readable medium" as used herein includes both computer storage media and communication media.

The computer 102 may also have input devices 216 such as a keyboard/keypad, mouse, pen, voice input device, touch input device, etc. Output devices 218 such as a display 220, speakers, a printer, etc. may also be included. These devices are well known in the art and need not be described at length here.

In the description that follows, the invention will be described with reference to acts and symbolic representations of operations that are performed by one or more computing devices, unless indicated otherwise. As such, it will be understood that such acts and operations, which are at times referred to as being computer-executed, include the manipulation by the processing unit of the computer 102 of electrical signals representing data in a structured form. This manipulation transforms the data or maintains it at locations in the memory system of the computer 102, which reconfigures or otherwise alters the operation of the computer 102 in a manner well understood by those skilled in the art. The data structures where data is maintained are physical locations of the memory that have particular properties defined by the format of the data. However, while the invention is being described in the foregoing context, it is not meant to be limiting as those of skill in the art will appreciate that several of the acts and operation described hereinafter may also be implemented in hardware.

FIG. 3 is a block diagram illustrating details of an architecture for the computer 102 that may be used in accordance with an embodiment of the invention. The computer 102 includes a host firewall services, indicated by the reference numeral 302. The firewall services 302 may be a component of an operating system or a separate firewall application or program running on or otherwise associated with the computer 102. In general, as used herein, a "firewall service" is a user mode service that is responsible for managing firewall policy and plumbing down policies to kernel components for enforcement. In the example shown, the firewall services 302 act as a host firewall services, in that the firewall services protect the computer 102 on which the firewall services run. The firewall services 302 may also be configured to make the computer 102 act as a gateway device.

In accordance with an embodiment of the invention, an object model, in FIG. 3 shown as a firewall object model 300, is provided as a general framework for managing network services, in the embodiment shown in FIG. 3, the firewall services 302. Although embodiments of the inventions are described with respect to an object model for managing firewall services such as the firewall services 302, aspects of the present invention and embodiments of the present invention may be utilized to manage other networking services for a computer, such as network quality of service, parental control, and network intrusion detection, as nonlimiting examples.

Briefly described, the firewall object model 300 isolates a user and/or an administrator from having to deal with the many possible issues involved in configuring and managing the firewall services 302. A user of the computer 102 or an administrator for the computer or the safe network may utilize the firewall object model 300 to manage the firewall services 302. For example, a user may access a Firewall User Interface 304 which accesses the firewall object model 300 and through which the user may set firewall policy 308 for the firewall services 302. The Firewall User Interface 304 may be provided by the firewall services 302, for example, or may be provided by an application or as part of an operating system, for example. In addition, the firewall object model 300 may be accessed by a Remote Management Tool 306, for example by a network administrator. In this manner, the firewall object model 300 may be used to remotely set policies for the firewall services 302, permitting a single administrator to manage services on a large number of computers.

The firewall policy 308 is maintained on or is associated with the computer 102. In the embodiment shown, the firewall policy 308 is shown as a database, but the firewall policy 308 may be maintained in several databases or may be stored in another suitable manner.

The firewall object model 300 includes two main name spaces: a firewall policy engine platform 310 and a policy object model 312. Briefly described, the firewall policy engine platform 310 is the central point for interacting with the firewall policy 308 and firewall platform kernel components 314. The firewall platform kernel components 314, such as a TCP/IP or network stack, are the components of the kernel that are actually perform the function of filtering packets or other information from the computer 102. The firewall policy engine platform 310 performs the acts of creating and configuring policy, as is further described below.

The policy object model 312 is used to specify firewall policies that the firewall services 302 support. The policy object model 312 permits an advanced user to define traditional packet-centric type filtering policy, or a less advanced user to define policy based upon the application and the user of the application, as described further below.

The firewall object model 300 uses an object-oriented paradigm, where manageable objects are modeled using the concepts of classes and instances. The objects present in the firewall object model 300 are classes, instances, properties, and qualifiers. Classes are models or templates for objects, while instances are occurrences of classes, properties are the individual fields of classes or instances, and qualifiers are modifiers of any of these. The policy object model 312 may be used to define policy objects, which are rules that specify security actions of the firewall services. The firewall policy engine platform 310 includes active objects which can perform acts, such as create, delete, or modify, on the policy objects.

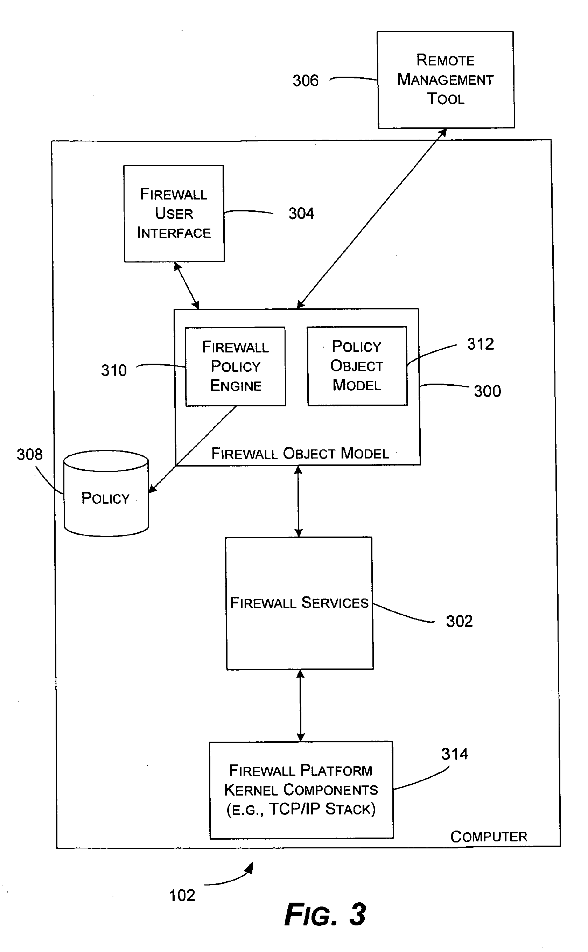

FIG. 4 shows a diagram generally representing firewall service objects that may be produced in accordance with an embodiment of the firewall policy object model 312. The PolicyObject object 400 is the abstract base class for the objects used in the firewall object model 300. It has three main subclasses: PolicyRule 402, PolicyAction 404, and PolicyCondition 406. The PolicyRule 402 models rules, and in the example given includes five different properties. A first property, Condition, defines one or more conditions to match in order for an action in this rule to take place. These conditions may be represented by PolicyCondition classes, as further described below. A second property, Action, defines one or more actions to take when the conditions specified in this rule are matched. These actions may be represented by PolicyAction classes, as further described below. A third property, TimeConstraint, specifies the day of the week and the time of the day when this rule will be effective, e.g., 9am-5pm Monday-Friday. A fourth property, NetworkLocation, specifies the network locations where this rule is effective. A fifth property, Weight, indicates the weight of the rule, and is used by the firewall policy engine platform 310 to resolve rule conflicts. The TimeConstraint, NetworkLocation, and Weight properties are editable by a user or administrator, for example via the Firewall User Interface 304 or the Remote Management Tool 306.

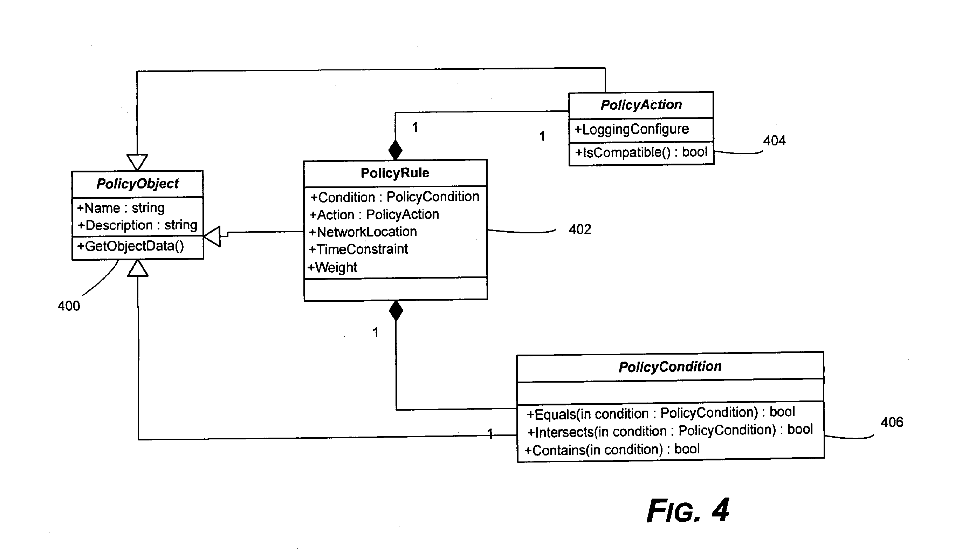

The PolicyRule 402 is an abstract class, and base abstract firewall policy objects can be derived therefrom. FIG. 5 shows an example of five different base firewall policy objects that are derived from PolicyRule 402. Others may be derived as needed to reflect further constraints imposed by certain network policies for example quality of service (QoS) or parental control policies. The five base firewall policy objects shown in FIG. 5 are TransportRule 502, KeyingModule 504, IKERule 506, IPSecRule 508, and ApplicationRule 510. Details regarding these example derived policy rule classes are included at Exhibit A.

In accordance with an embodiment of the invention, the firewall services 302 are capable of examining a packet at several different layers as the packet moves through a network stack. For example, the firewall services 302 may include an IP framing layer filter, a TCP layer filter, a transport layer filter, an application layer filter, a remote procedure call layer filter, and many other filters that provide lower level filtering so that an item does not have to move through the entire stack before it is blocked. Such firewall services 302 are planned to be implemented in Microsoft's LONGHORN operating system, yet to be released. Application programming interfaces may be provided to third parties to allow the third parties to participate in the filtering decisions that take place at the various layers. Specific implementation details of the filters are not necessary for a description of this invention. However, the base abstract firewall policy objects may be configured so as to operate with these particular filters at each respective layer.

The TransportRule 502 models the traditional firewall rule that mainly filters on the standard 5-tuple. The IPSecRule 508, the KeyingModule rule 504 and the IKERule 506 are three different rules for specifying IPSec-related policies. As is known, IPSec is a protocol that provides security for transmission of sensitive information over unprotected networks such as the Internet. IPSec acts as the network layer, protecting and authenticating IP packets between participating devices. Details of the IPSecRule 508, the KeyingModule rule 504 and the IKERule 506 are given in Exhibit A, attached hereto.

ApplicationRule 510 utilizes the method disclosed in U.S. Patent Application No. 10/603,648, filed June 25, 2003, and entitled "Method of Assisting an Application to Traverse a Firewall". Briefly described, that application describes an application layer ("ALE") that may be utilized with the network stack so that a user may easily create a simple firewall policy, or network access policy, to either allow or deny firewall unaware applications and services on the user's computer to connect to the network. The policies are set on a per-user and per-application basis. The user does not need to know or use rules reports, protocols, or IP addresses to enable an application to work through a firewall. An enforcement module includes an interception module that watches for connect and listen attempts by applications and services to the network stack. The interception module traps these attempts and determines what user is making the attempt, what application or service is making the attempt, and then conducts a firewall policy lookup to determine whether or not the user and/or application is allowed to connect to the network. If so, the interception module may instruct the host and/or edge firewall to configure itself for the connection being requested.

The PolicyCondition object 406 is an abstract object from which policy condition classes may be derived. Each policy condition class represents modes or situations that the firewall services 302 may encounter. FIG. 6 shows a number of different policy condition classes that may be derived from the PolicyCondition object 406 in accordance with an embodiment of the present invention. Each of these policy condition classes represents different modes or conditions, such as IP condition, transport condition, application condition, or other modes that may be in existence upon an attempt at using the firewall services 302. Classes derived from PolicyCondition 406 may have subclasses. For example, transport conditions may include TCP condition, ICMP condition, UDP condition, as examples. Descriptions of the condition classes shown in FIG. 6 are included at Exhibit B. Again, as with the policy objects described above, the conditions may relate to filters that are available to the firewall services 302.

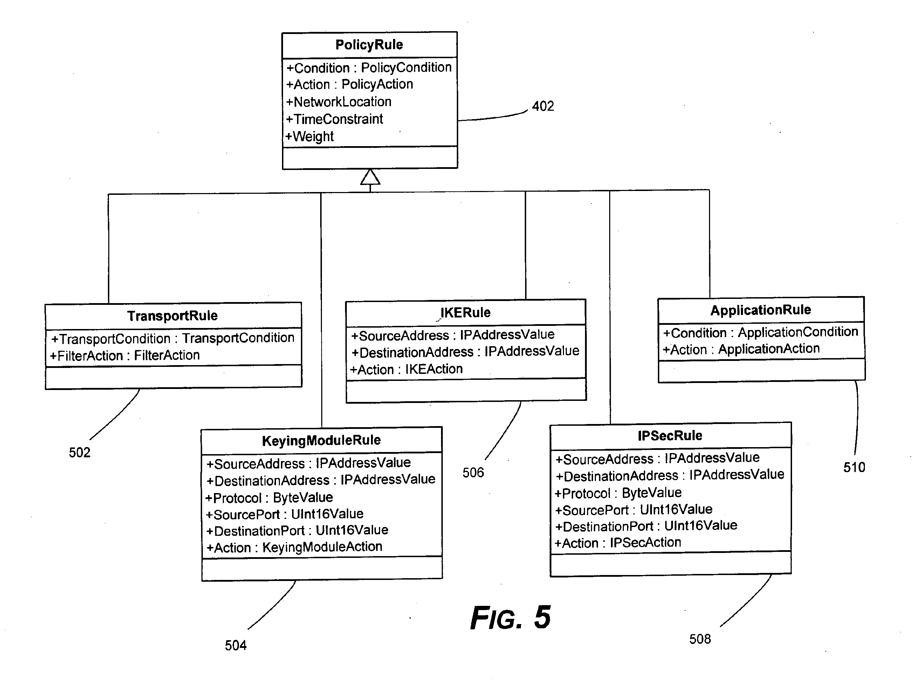

A number of different policy actions may be utilized with the policy object model 312. Examples of different policy action classes, derived from the PolicyAction class 404, are shown in FIG. 7. In general, the actions that are allowed are Permit, which allows packets that match the associated condition, Deny, which drops packets that do not match the associated condition, and Log, which logs packets that match the associated condition. Combinations of these may be used as well. More complex actions may be provided, such as authentication. A description of many examples of the actions shown in FIG. 7 is included at Exhibit C.

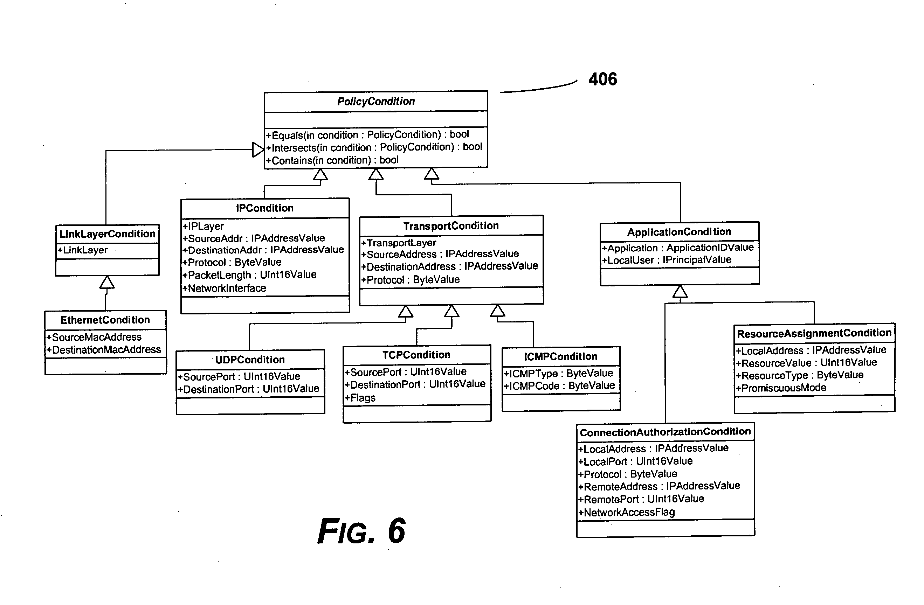

As can be seen in FIG. 8, in accordance with an embodiment of the invention, the firewall policy engine platform 310 includes four main classes: a firewall class object 802, a setting editor class object 804, a rule editor class object 806, and a rule explorer class object 808. The firewall class object 802 is the main class for interacting with the firewall services 302. The firewall class object 802 follows a singleton pattern to reference the firewall services 302. That is, the class uniquely describes only a single instance, i.e., the firewall services 302 available on the computer 102.

A list of example properties and methods for the firewall class object 802 is shown as part of the firewall policy engine platform 310 in FIG. 9. For the firewall class object 802, in accordance with an embodiment of the invention, the firewall class object 802 includes properties of FirewallMode and LogSettings. The FirewallMode is the current filtering mode of the firewall services 302. It value may be, for example, BlockAllTraffic, PermitAllTraffic, or Filtering, which represents that the firewall services 302 are running and are enforcing settings that have been defined. The LogSettings may represent a global setting that specifies the logging settings, including things to log, logging limit and overflow behavior. Each of these properties is editable, for example via the Firewall User Interface 304 or the Remote Management Tool 306. Other properties may be included as part of the firewall class object 802. The firewall class object 802 may also include methods or operations to instantiate or create new instances of the other three classes of the firewall policy engine platform 310; i.e., the setting editor class object 804 (AcquireSettingEditor), the rule editor class object 806 (AcquireRuleEditor), and the rule explorer class object 808 (AcquireRuleExplorer). An example of the configuration of the firewall class object is included at Exhibit E.

Each of the methods AcquireSettingEditor, AcquireRuleEditor, and AcquireRuleExplorer utilizes a policy provider as a parameter. In accordance with an embodiment of the invention, the firewall class object 802 acts as an arbitrator when there is a conflict between policies of multiple policy providers. In general, a policy provider is a source of firewall policies for the firewall services 302, preferably one that can be securely identified. A policy provider is associated with a particular priority class or level at which all the rules from this provider will be added. For example, policy providers may be ranked in accordance with their individual priorities. A remote network security management server, e.g. the user's Internet Service Provider (ISP) who manages the user's computer as a value-add service, may get a ranking of a "1," indicating highest priority, and may be given the definition in the firewall class object 802 of ManagedServiceProvider. A LocalProvider is given the priority of "2," and represents a local user or administrator of the computer. A DomainProvider is an administrator of the domain to which the user is attached, and receives a priority of "3". An application provider may be given a priority of "4". An example of a priority set by an application provider would be a financial services application that has a setting requiring that all traffic to its server be secure.

The setting editor class 804 may include a number of properties, including ApplicationSettings, DefaultApplicationSetting, DefaultOSServiceSetting, TrustedZone, SecureZone, and IsICMPAllowed. The ApplicationSettings property represents the application firewall rules stored in the system. The DefaultApplicationSetting is the default firewall setting to apply when an application's firewall setting is not specified. The DefaultOSServiceSetting is the default firewall setting to apply when an operating system service's firewall setting is unspecified. The TrustedZone property is the trusted Internet Protocol ("IP") address list to use when an application setting does not specify its own trusted IP addresses. The SecureZone property is the default trusted authenticated remote identity list to use when an application setting does not specify its own trusted authenticated remote identities. Finally, the IsICMPAllowed property indicates whether Internet Control Message Protocol ("ICMP") messages are allowed; e.g., the TCP/IP stack will respond to pings and generate ICMP errors. Otherwise, the ICMP messages are blocked. All of these properties may be editable, for example via the Firewall User Interface 304 or the Remote Management Tool 306, except the ApplicationSettings property.

The example of the setting editor 804 shown in FIG. 9 includes two methods: SetDefaultSecurityLevel and GetSecurityLevel. The parameters for the SetDefaultSecurityLevel are user and security level. The parameter for the GetSecurityLevel is user. The SetDefaultSecurityLevel allows a user or administrator to set the default security level for the parameter-specified user. The GetSecurityLevel allows a user or administrator to get the default security level for the parameter-specified user.

The setting editor class object 804 provides firewall and policy management software developers a programmatic interface to manage firewall policy in a simple and application- and user-centric form. The main objects that it operates on are the ApplicationSetting 902 and the SecurityLevel 904. ApplicationSetting 902 associates security levels with applications and users, and includes three properties: the ApplicationID, the User, and the SecurityLevel. The ApplicationID and User represent the application to which this ApplicationSetting 902 pertains, and the user for which the ApplicationSetting is specified. Together they form a unique key for ApplicationSetting 902. The SecurityLevel is a read-write property and may be edited by a user or administrator, for example via the Firewall User Interface 304 or the Remote Management Tool 306. The property represents the security level when the particular user (User) uses the particular application (ApplicationID).

The SecurityLevel may be supplied by a SecurityLevel object 904 utilizing a GetRules method of the ApplicationSetting 902. The GetRules object utilizes the parameters of Application, User, and Contacts to obtain a list of application rules that enforce the setting "use this security level with these remote contacts when this user uses this application." In accordance with an embodiment of the present invention, the SecurityLevel object 904 includes a set of templates that includes the list of application rules for the particular security level of the application, the user, and the contacts. More information about the SecurityLevel object 904 and ApplicationSetting is provided at Exhibit D.

The RuleEditor class object 806 is an application programming interface used by advanced policy providers to perform policy related operations such as add, remove, or update policies. As described above, there may be more than one policy provider on a single host. The RuleEditor class object 806 provides an advanced view of the system allowing administrators and power users to define specific parameters for policy rules of the firewall services 302. The example of the RuleEditor class object 806 in FIG. 9 includes two properties: PriorityClass and Provider. PriorityClass is the class of the priority which the particular provider is given, as described above. Provider is the provider requesting the action.

The example of the RuleEditor class object 806 in FIG. 9 includes five methods: AddRule, RemoveRule, UpdateRule, GetRules, and RemoveAll. AddRule is utilized to push down a set of policies to the firewall policy engine platform 310. The request to add a PolicyRule may fail if the PolicyRule is invalid (e.g., the PolicyAction does not match the PolicyCondition), if the provider trying to add the policy does not have privilege to do so (based, for example, on the rankings set forth above), or if the transaction is aborted. If the request to add a PolicyRule does not fail, the firewall policy engine platform 310, in turn, plumbs the new policy down to the firewall platform kernel components 314.

RemoveRule is utilized to removed a specified policy, and includes the parameter of the particular policy to be removed, and may fail because of improper privilege or transaction failure. UpdateRule is used to change the specified policy that was previously added, and utilizes as a parameter the policy that is to be changed. UpdateRule is subject to the same exceptions as AddRule. RemoveAll removes all of the rules that this particular policy provider has created, and may fail due to inadequate privilege. It may be an atomic operation, i.e., done with one transaction.

The rule explorer class object 808 permits a user or administrator to view all policies that are currently in the firewall platform, subject to privilege. In accordance with an embodiment of the invention, the view is read-only. In the example of the rule explorer class object 808 in FIG. 9, there is one event: RuleChangedEvent. RuleChangedEvent is for the rule explorer class object 808 to receive notification when the policies that it views have changed. In the example of the rule explorer class object 808 in FIG. 9, there is one property, which is EventFilter. EventFilter permits a user or administrator to define a subset of the policies to be viewed. There is a single method of GetRules which obtains rules that are currently enforced in the firewall platform in accordance with the EventFilter. The operation may be done in a single transaction.

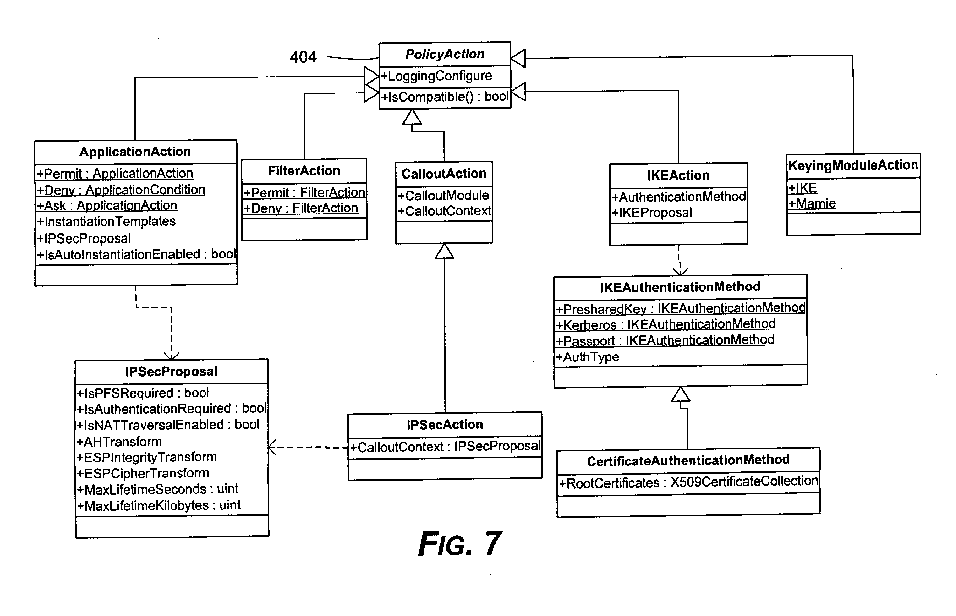

FIG. 10 is a flow diagram generally representing steps for creating, editing or deleting a policy rule utilizing the RuleEditor object 806 in accordance with an embodiment of the invention. These steps may performed, for example, via software associated with the Firewall User Interface 304 or the Remote Management Tool 306.

Beginning at step 1000, the firewall class 802 is created. A user then requests to acquire the RuleEditor class at step 1002 using the respective method in the firewall class 802. At step 1004, a determination is made whether or not the user is requesting deletion of a policy or policies. If so, step 1004 branches to step 1006, where the user provides the particular policy as a parameter. At step 1008, a determination is made whether or not the user has authorization to delete the policy, for example by comparing the user's provider ranking (described above) versus a minimal ranking needed for deletion of the particular policy. If the user does not have authorization, then 1008 branches to step 1010 where the transaction fails. If the user does have authorization, then step 1008 branches to step 1012, where the policy is deleted.

If the user wishes to edit or add a policy, then step 1004 branches to step 1014. The method for editing a policy is somewhat different than adding, but the similarities are sufficient so that the two are described together here. The steps shown in FIG. 10 from 1014 are directed to adding a policy, and differences with editing, where significant, are described further below. For example, if a user is editing a policy, then prior to step 1014, the user provides the policy as a parameter so that it may be edited.

At step 1014, the user derives a policy class, or chooses from existing policy classes, such as the rules 502-510 shown in FIG. 5. At step 1016, the user selects a condition from available policy conditions, or derives a new policy condition. At step 1018, the user selects an action or derives a new policy action for the policy rule that is being established. If a user were editing an existing policy instead of creating a policy, then steps 1014-1018 may involve selecting a different policy class, condition, and/or action instead of starting from scratch.

At step 1020, a determination is made whether the particular user has authorization to commit to the new policy. This determination can be made similar to the determination made in step 1008. If not, then step 1020 branches to step 1022, where the transaction fails. If the user does have authorization, then step 1020 branches to step 1024, where a determination is made whether or not the particular policy is allowed. For example, a determination can be made whether the particular condition matches the action in accordance with rules set by the policy class. If not, step 1024 branches to step 1026, where the transaction fails. If so, then step 1024 branches to step 1028, where the policy is plumbed to the firewall platform kernel components 314 by the firewall policy engine platform 310.

The method shown in FIG. 10 permits an advanced user to establish a firewall policy for a computer 102. The advanced user may set the firewall policies in accordance with filtering needs for the computer 102.

FIG. 11 is a flow diagram generally representing steps for creating a policy rule utilizing the setting editor object 804. Beginning at step 1100, the firewall class 802 is created. At step 1102, the setting editor object is acquired via the method provided in the firewall class 802.

Because the application and user are known, and the application setting 902 provides available security levels for the known application and the known user, and the user is supplied one or more security levels at step 1104. The user selects one of the security levels at step 1106. If the user is not authorized to set such a security level, then step 1108 branches to step 1110, where the transaction fails. If the user does have authorization, then step 1108 branches to step 1112, where the firewall policy engine platform 310 plumbs the policy to the firewall platform kernel components 314.

As can be seen, the method of FIG. 11 provides a relatively simple method for a user who is not advanced to set firewall policy for a computer 102. The policy may be set without knowledge of ports, packets, or other items that typically must be entered to configure a firewall.

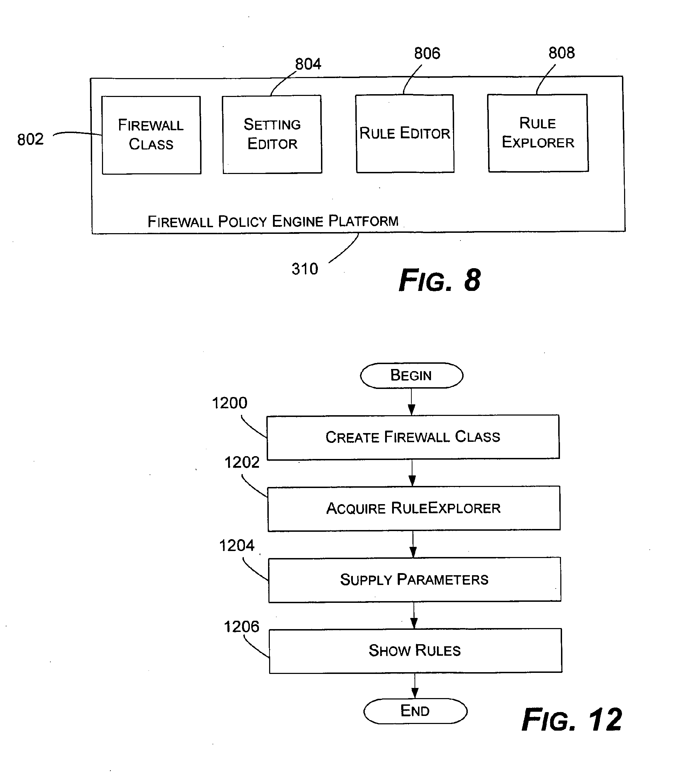

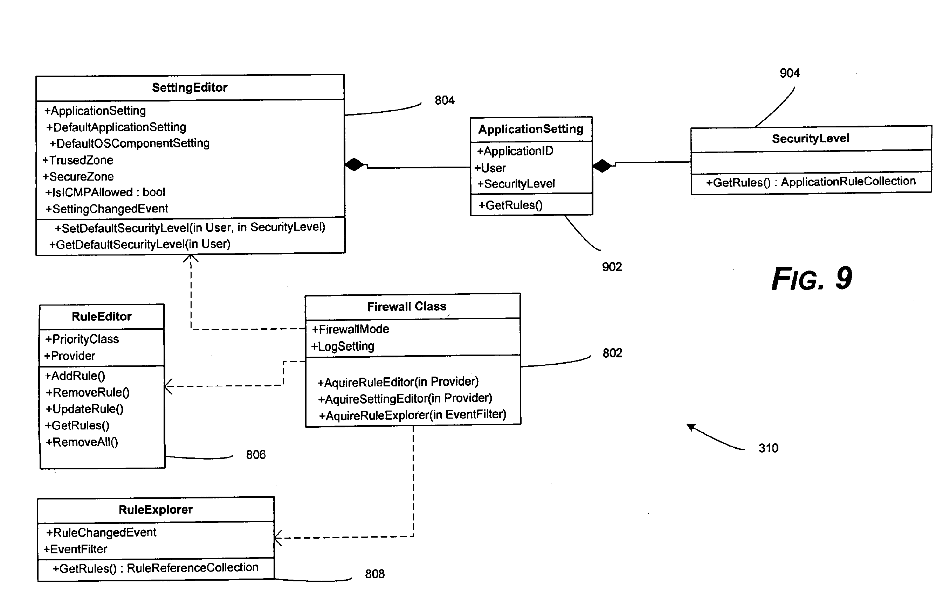

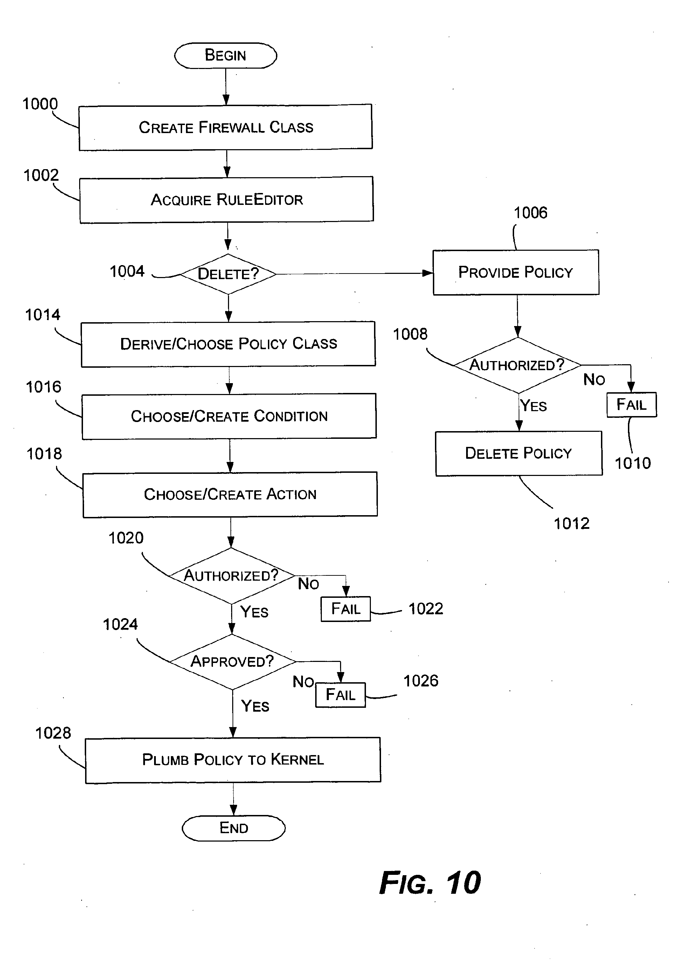

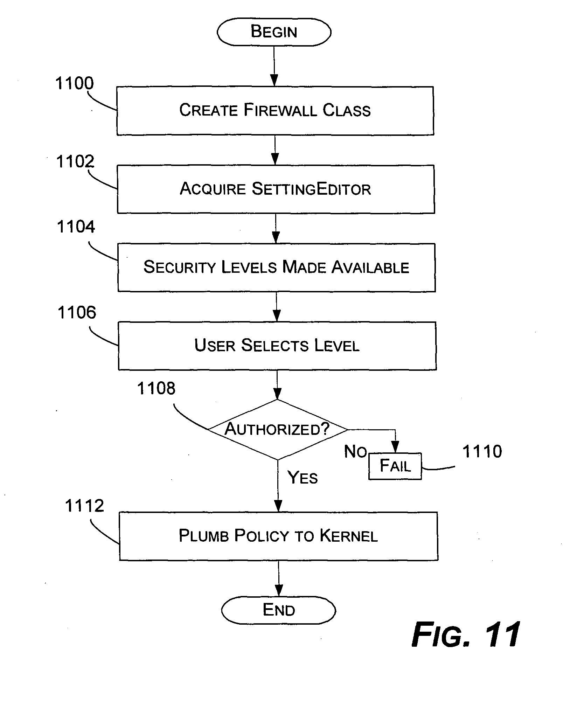

FIG. 12 is a flow diagram generally representing steps for viewing policy rules utilizing the rule explorer object 808 in accordance with an embodiment of the invention. Beginning at step 1200, the firewall class 802 is created. At step 1202, the RuleExplorer object 808 is acquired using the associated method in the firewall class 802. The appropriate parameters for the rules the user wants to see (e.g., all rules that the particular provider has created) are provided at step 1204. At step 1206, the rules are provided for viewing to the user, for example via the Firewall User Interface 304.

Although not shown in FIG. 12, viewing rules via the RuleExplorer object 808 may require authorization, and thus may be limited to a particular level of provider and higher. In addition, if changes occur to the rules, notifications of those changes may be sent to the user via the RuleChangeEvent property.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

### EXHIBIT A

### System.Firewall.Policy.ApplicationRule

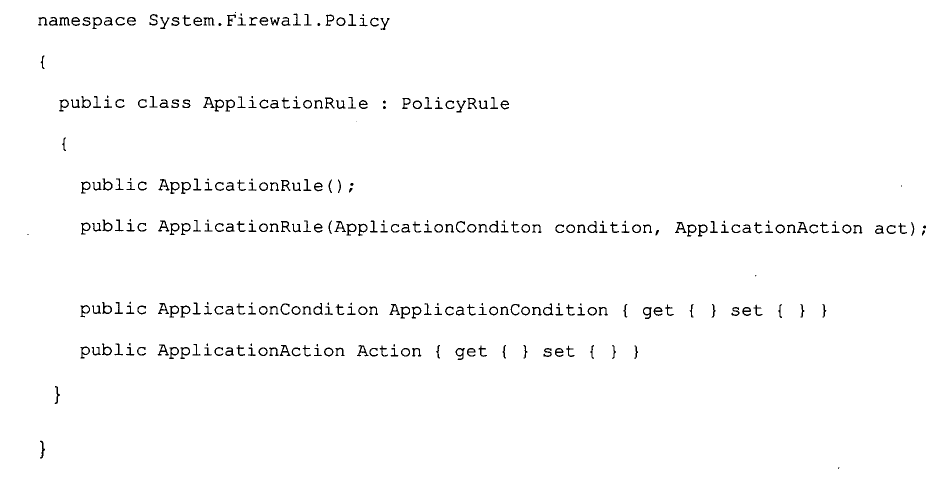

ApplicationRule is the rule that is enforced by the application layer enforcement although it may also dynamically instantiate rules at other layers e.g. an IPSec rule the transport layer to secure all traffic by a certain application or user.

### System.Firewall.Policy.TransportRule

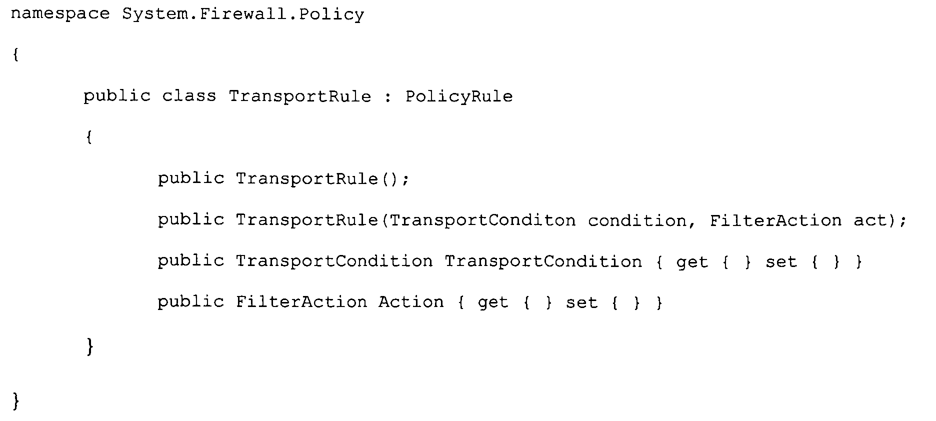

TransportRule models the traditional firewall rule that mainly filters on the standard 5-tuple.

### System.Firewall.Policy.IKERule

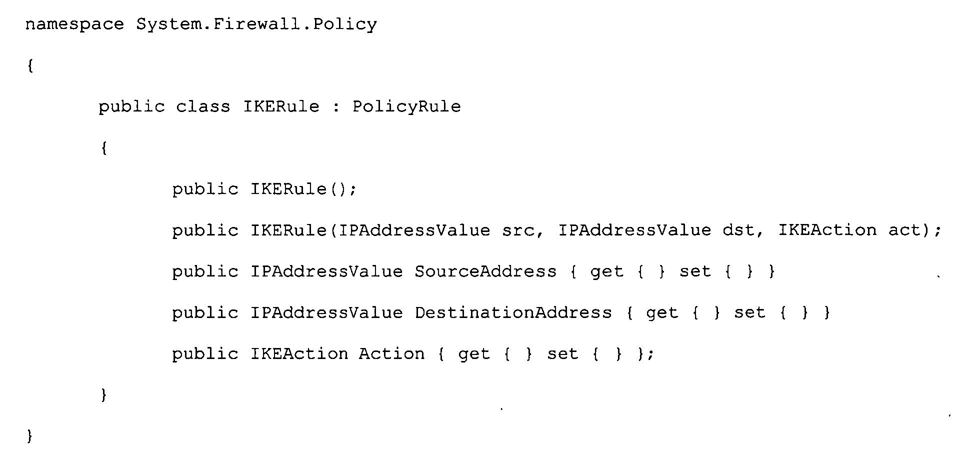

There are three different rules for specifying IPSec related policies: IPSecRule, KeyingModuleRule and IKERule. IPSecRule is added at the transport layer where matching traffic triggers the IPSec callout. The IPSec callout set a security context in the packet so that the IPSec module will be invoked to search for existing SAs to secure the traffic. If none is found, KeyingModuleRule will be matched to find the right keying module to perform key negotiation. Depending on the keying module selected, the corresponding IKERule or MamieRule will be matched to find the appropriate configure settings for performing the key exchange. Then IPSecRule will again be matched to set up the proper IPSec SA that will be used for actually securing the traffic e.g. AH or ESP.

**IKERule** specifies the parameters for carrying out IKE key negotiation protocol. **IKERule** can only take local address and remote address as its condition. The action for **IKERule** is an **IKEAction.**

### System.Firewall.Policy.IPSecRule

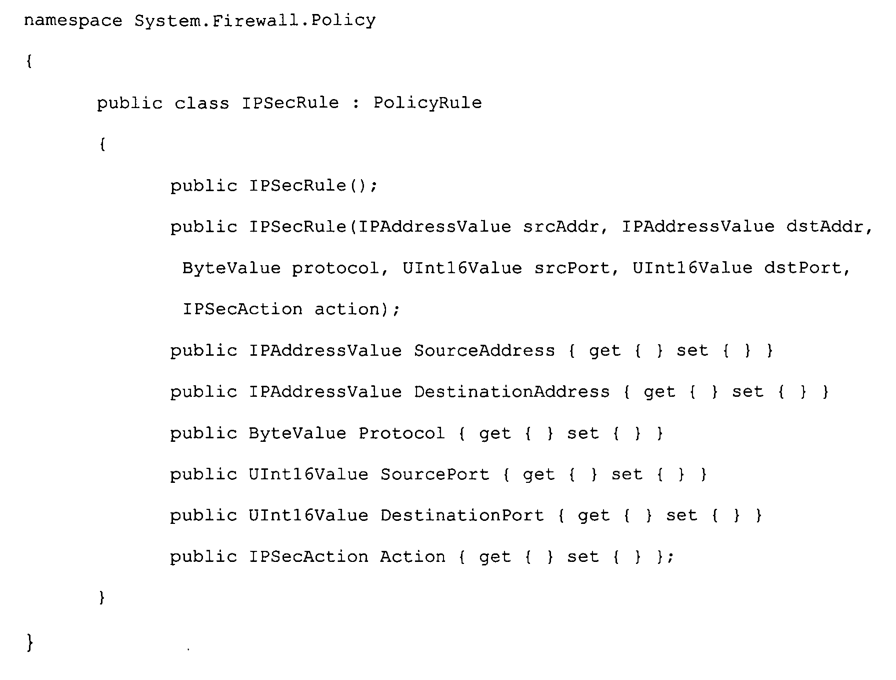

Conceptually **IPSecRule** plays two distinct roles, one is to trigger the IPSec callout when the associating condition is matched, and another to indicate the configure parameters for securing the matching traffic. So it specifies both what packets need to be secured and also how they will be secured. Different 5 tuples can have different IPSec parameters. Although at the transport layer, the firewall platform can match more fields than the standard 5-tuple e.g. TCP flags, for the purpose of carrying out IPSec, 5-tuple is sufficient. So **IPSecRule** only lists the standard 5 tuple, i.e. source address, destination address, protocol, source port and destination port, as its condition fields. Other fields can be added if there are practical cases requires traffics matching the same 5-tuple to be secured differently based on those fields.

### System.Firewall.Policy.KeyingModuleRule

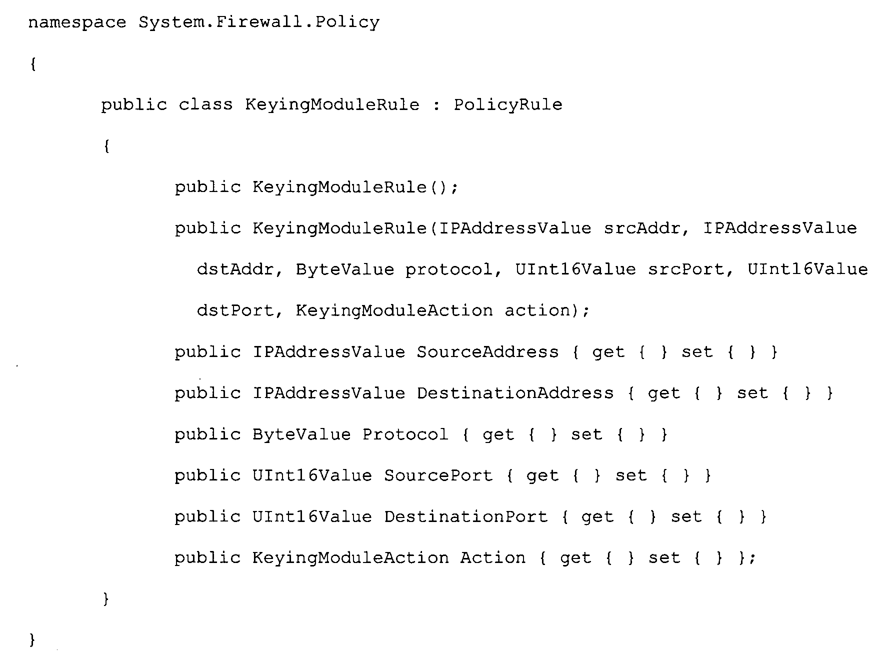

**KeyingModuleRule** selects which key negotiation module to use when there is no existing secure channel (association) to the remote peer, which could be a host or a user. **KeyingModuleRule** also take the standard 5-tuple as its condition. In case where more than one module is available, for example Mamie for user authentication in addition to traditional IKE, **KeyingModuleAction** lists them in the order that they will be tried either concurrently or sequentially until one of them succeeds or all fails.

### EXHIBIT B

### System.Firewall.Policy.PolicyCondition

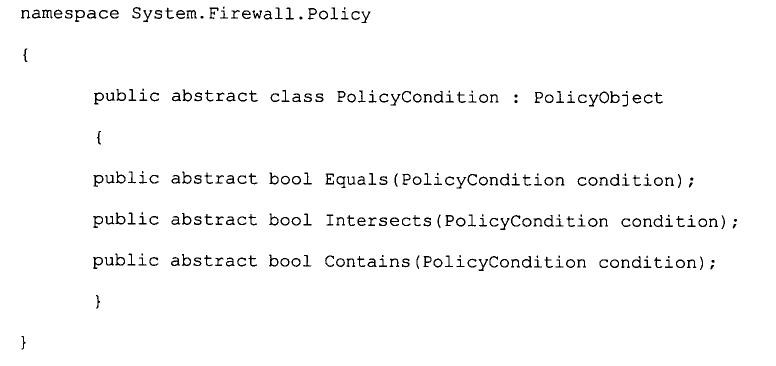

| **Method** | |
|---|---|
| **Name** | Equals |
| **Return Type** | Bool |
| **Description** | Return true if all packets that match this PolicyCondition object also match the passing argument *condition* and vice versa. Otherwise return false. |
| **Parameters** | PolicyCondition cond |

| **Method** | |
|---|---|
| **Name** | Intersects |
| **Return Type** | Bool |
| | |
| **Description** | Return true if there are packets that match this PolicyCondition object also match the passing argument *condition.* Return false if there is no such packet. |
| **Parameters** | PolicyCondition |

| **Method** | |
|---|---|
| **Name** | Contains |
| **Return Type** | Bool |
| **Description** | Return true if all packets that match the passing argument *condition* also match this PolicyCondition object. Otherwise return false. |
| **Parameters** | PolicyCondition |

### System.Firewall.Policy.EthernetCondition

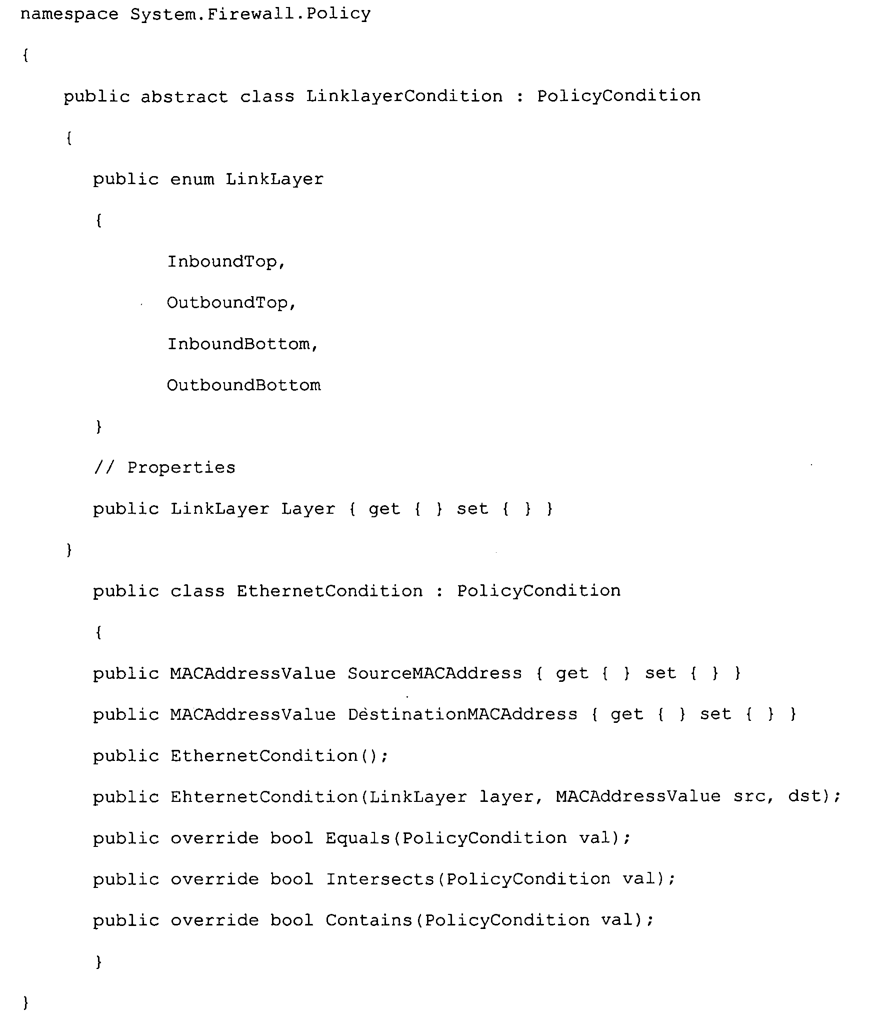

| **Property** | |
|---|---|
| **Name** | Layer |
| **Description** | Specify where this link layer rule will be applied: |
| | |
| | • **InboundTop:** This layer is called after each received packet has traversed all other NDIS light weight filter shims. On the receive path, this is the last chance to filter a data-link packet before it is delivered to the network layer for processing. |
| | |
| | **• OutboundTop:** This layer is called before each sent packet has traversed any other NDIS light weight filter shims. On the send path, this is the first chance to filter a data-link packet before it is processed by other NDIS light weight filters. |
| | |
| | **• InboundBottom:** This layer is called before each received packet has traversed any other NDIS light weight filter shims. This layer is the first opportunity to filter a received packet. |
| | **• OutboundBottom:** This layer is called after each sent packet has traversed all other NDIS light weight filter shims. This layer is the last opportunity to filter a sent packet. |
| **Access** | Read/Write |

| **Property** | |
|---|---|
| **Name** | SourceMACAddress |
| **Description** | This value is used to match the source MAC address field in the Ethernet header. |
| Access | Read/Write |

| **Property** | |
|---|---|
| **Name** | DestinationMACAddress |
| **Description** | This value is used to match the destination MAC address field in the Ethernet header. |
| **Access** | Read/Write |

### System.Firewall.Policy.IPCondition

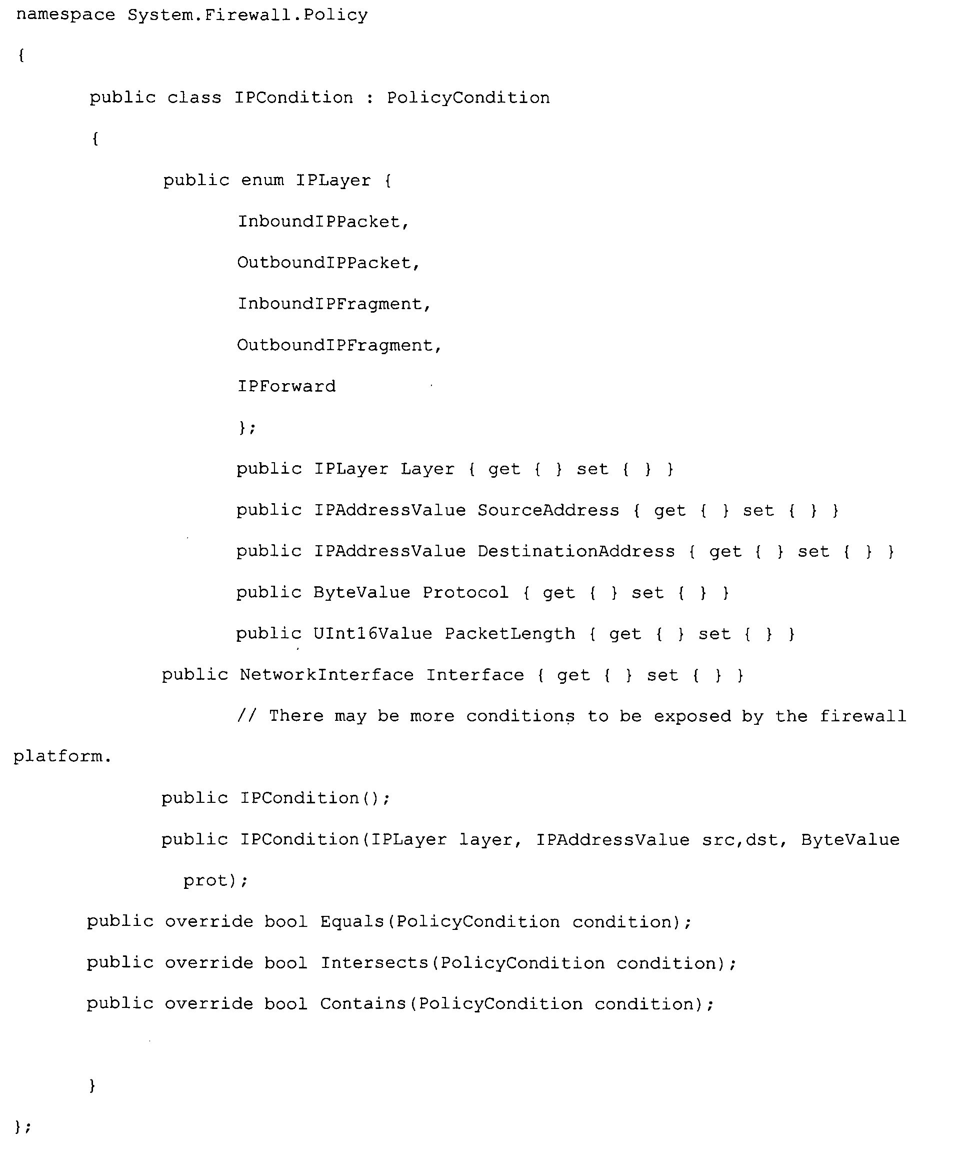

The IPAddress class is taken from System.Net namespace. It support both v4 and v6 IPAddresses. However, for one particular condition, all the condition fields have to be interpreted in the context of one address family. In other words, it will raise a runtime exception if the source address is a v4 address but the destination address is a v6 address.

| **Property** | |
|---|---|
| **Name** | Layer |
| **Description** | The specific IP layer at which this condition is to be applied. The possible IP layers are as following: |
| | |
| | **• InboundIPPacket:** This layer is called after a just after the IP header has been parsed and just before any header processing takes place on received IP packet. IPSec decryption and reassembly will not have occurred at this point. |
| | |
| | **• OutboundIPPacket:** This layer is called just before a sent packet is evaluated for fragmentation. By the time this layer is called, all IP header processing is complete and all extension headers are in place. IPSec authentication and encryption will have already occurred at this time. |
| | **• InboundIPFragment:** This layer is called for every received fragment. Non-fragmented packets that are received will not be called out for this layer. |
| | |
| | **• OutboundIPFragment:** This layer is called for every sent and forwarded fragment. If a sent IP packet is not fragmented, it will not be called out for this layer. |
| | |
| | **• IPForward:** This layer is called for each forwarded packet. |
| **Access** | Read/Write |

| **Property** | |
|---|---|
| **Name** | SourceAddress |
| **Description** | This value is used to match the source address field in the IP header. |
| **Access** | Read/Write |

| **Property** | |
|---|---|
| **Name** | DestinationAddress |
| **Description** | This value is used to match the destination address field in the IP header. |
| Access | Read/Write |

| **Property** | |
|---|---|
| **Name** | Protocol |
| **Description** | This value is used to match the protocol field in the IP header. |
| **Access** | Read/Write |

| **Property** | |
|---|---|
| **Name** | PacketLength |
| **Description** | This value is used to match the packet length field in the IP header. |
| **Access** | Read/Write |

| **Property** | |
|---|---|
| **Name** | NetworkInterface |
| **Description** | Specify the network interface on which this condition will be matched. If the layer property is set to be IPForward, it will only match the receiving interface of the forwarded packets when the rule direction is set to Inbound and the outgoing interface when the rule direction is set to Outbound. |
| | |
| **Access** | Read/Write |

### System.Firewall.Policy.TransportCondition

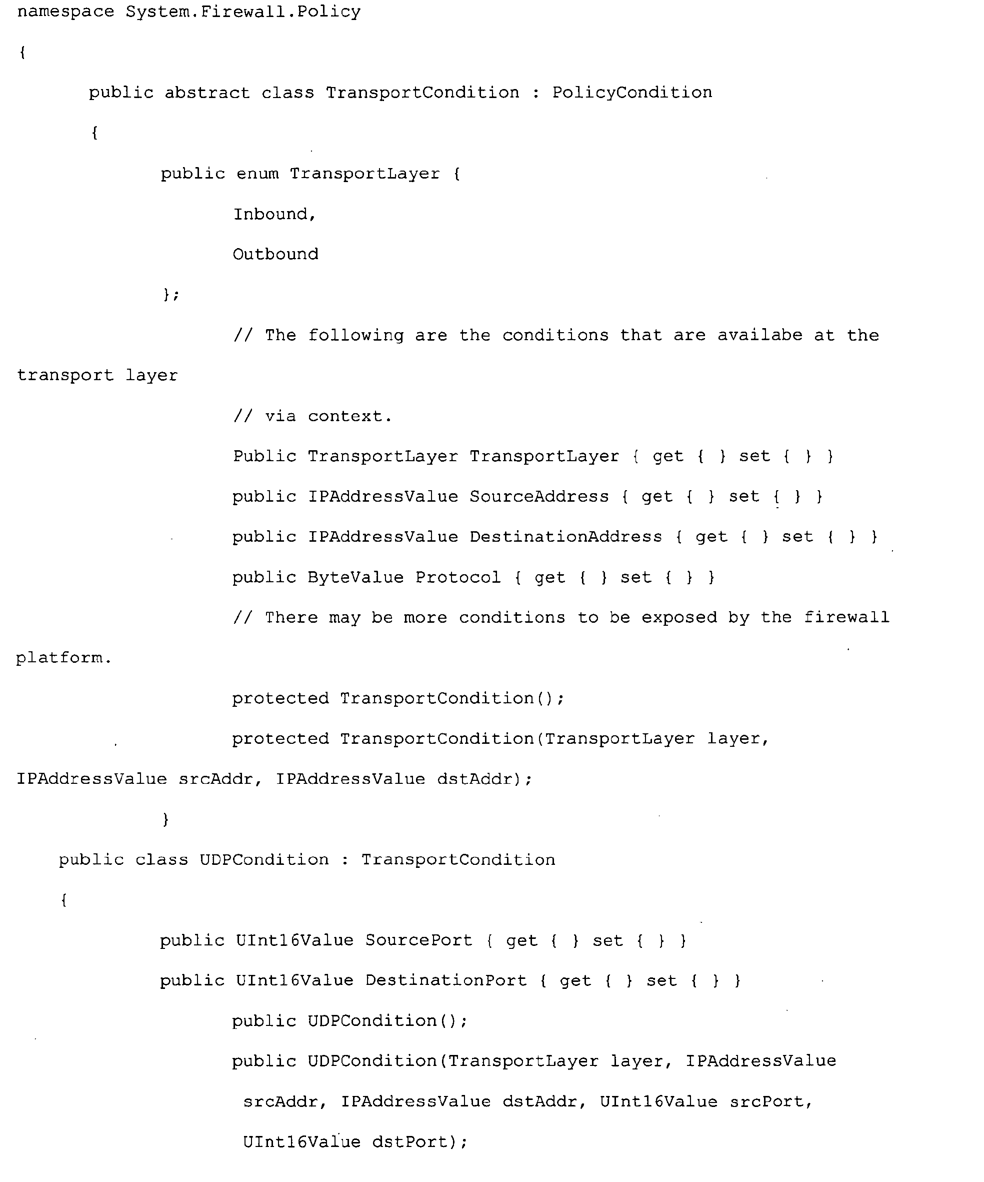

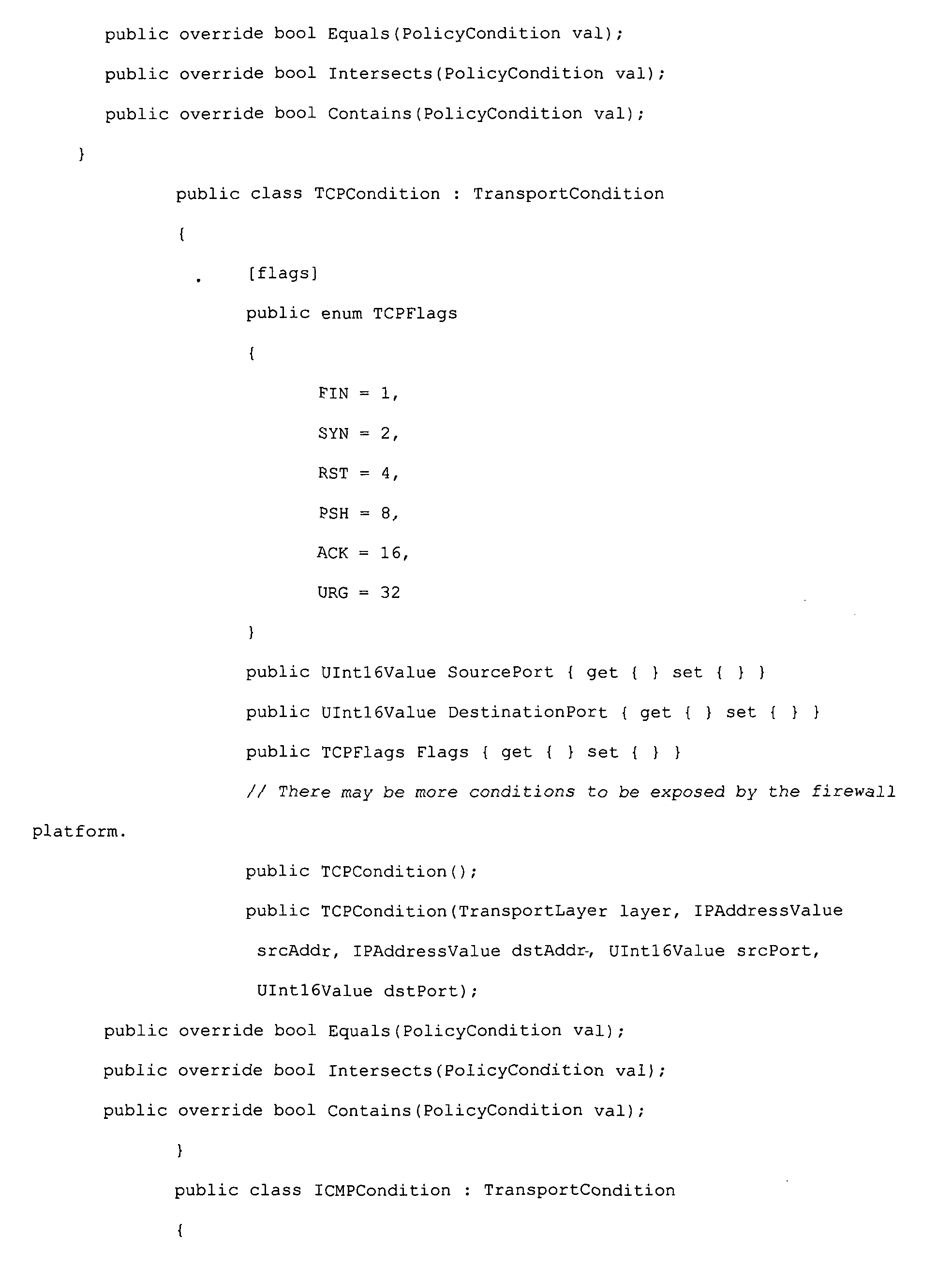

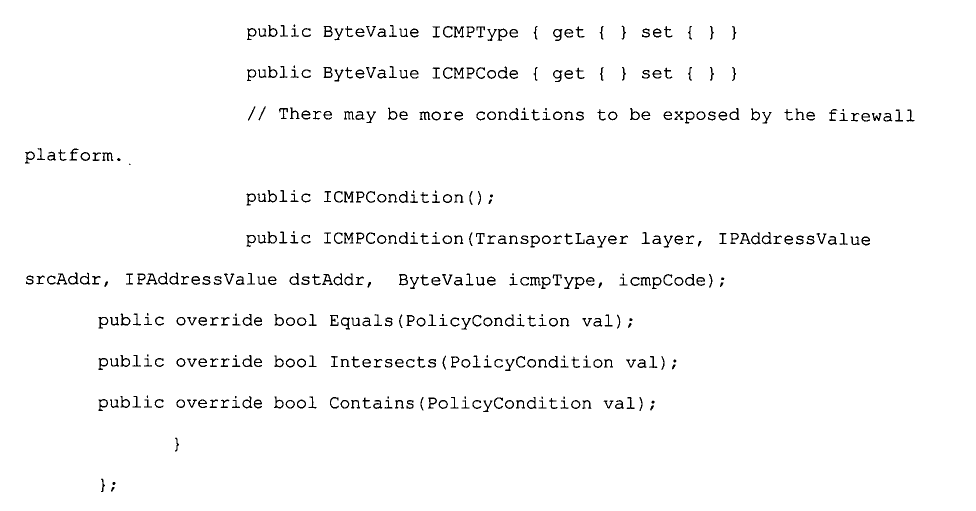

ICMP v6 defines ICMP type and code differently than ICMP v4. The address family of the source and destination address determines if an ICMPCondition will be interpreted as ICMP v4 or v6.

| **Property** | |
|---|---|
| **Name** | SourcePort |
| **Description** | This value is used to match the source port field in the TCP/UDP header. |
| **Access** | Read/Write |

| **Property** | |
|---|---|
| **Name** | DestinationPort |
| **Description** | This value is used to match the destination port field in the TCP/UDP header. |
| **Access** | Read/Write |

| **Property** | |
|---|---|
| **Name** | Flags |
| **Description** | This value is used to match the corresponding bits in the TCP flags field: FIN, SYN, RST, PSH, ACK, URG |
| **Access** | Read/Write |

| **Property** | |
|---|---|
| **Name** | ICMPType |
| **Description** | This value is used to match the type field in the ICMP header. |
| **Access** | Read/Write |

| **Property** | |
|---|---|
| **Name** | ICMPCode |
| **Description** | This value is used to match the code field in the ICMP header. |
| **Access** | Read/Write |

### System.Firewall.Policy.IPSecAuthorizationCondition

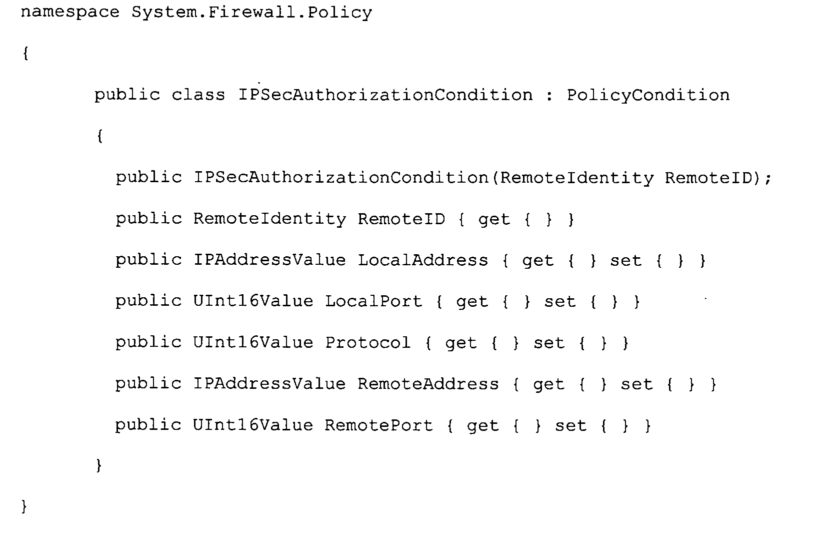

IPSecAuthorizationCondition matches both inbound and outbound packet IPSec context.
The inspection is assumed to take place right after IPSec authentication completes. If the associated action is Permit, then the IPSec SA will be established and traffic will be secured.
If the action to take is Deny, no SA will be created and the IPSec main mode negotiation will fail.

### System.Firewall.Policy.ApplicationCondition

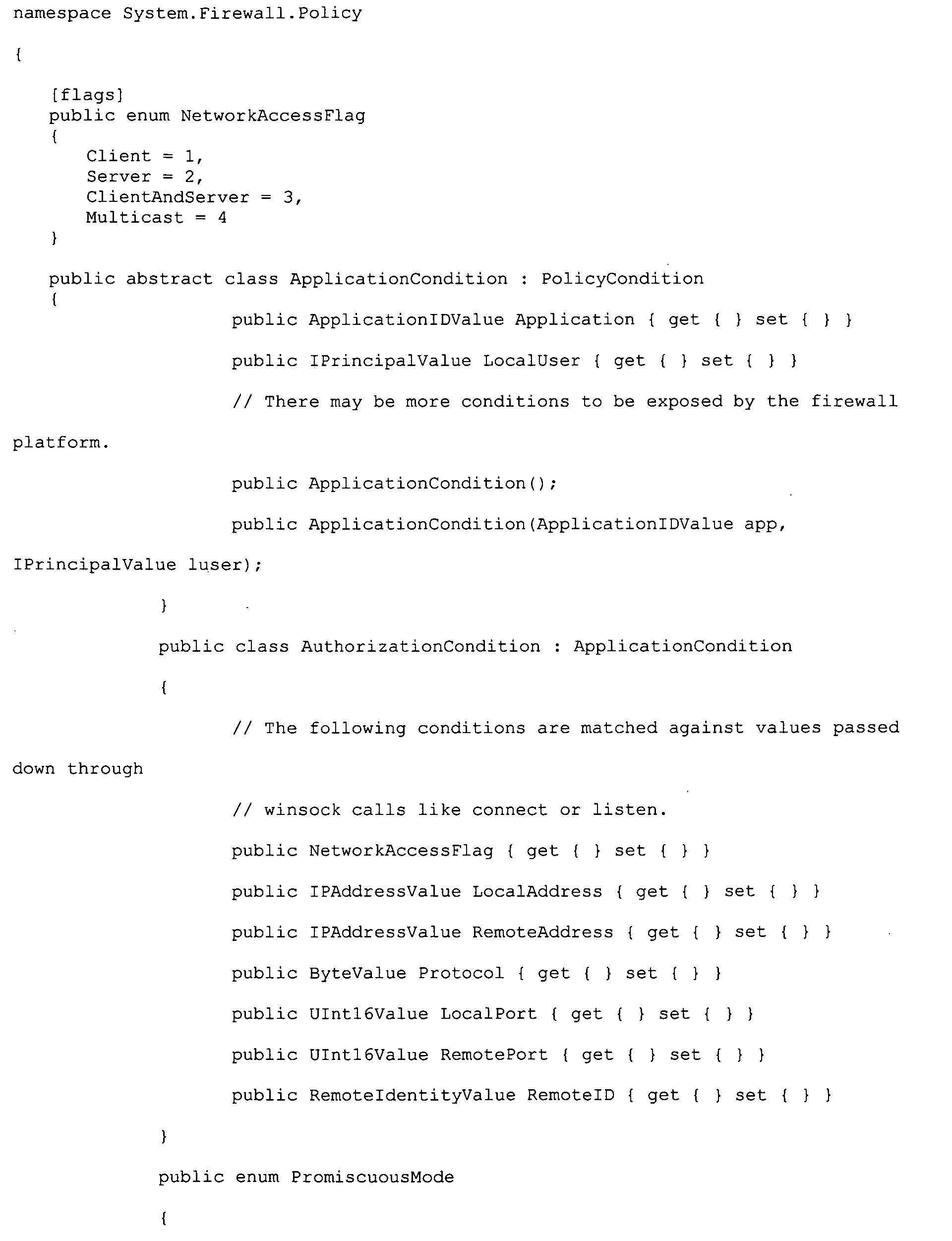

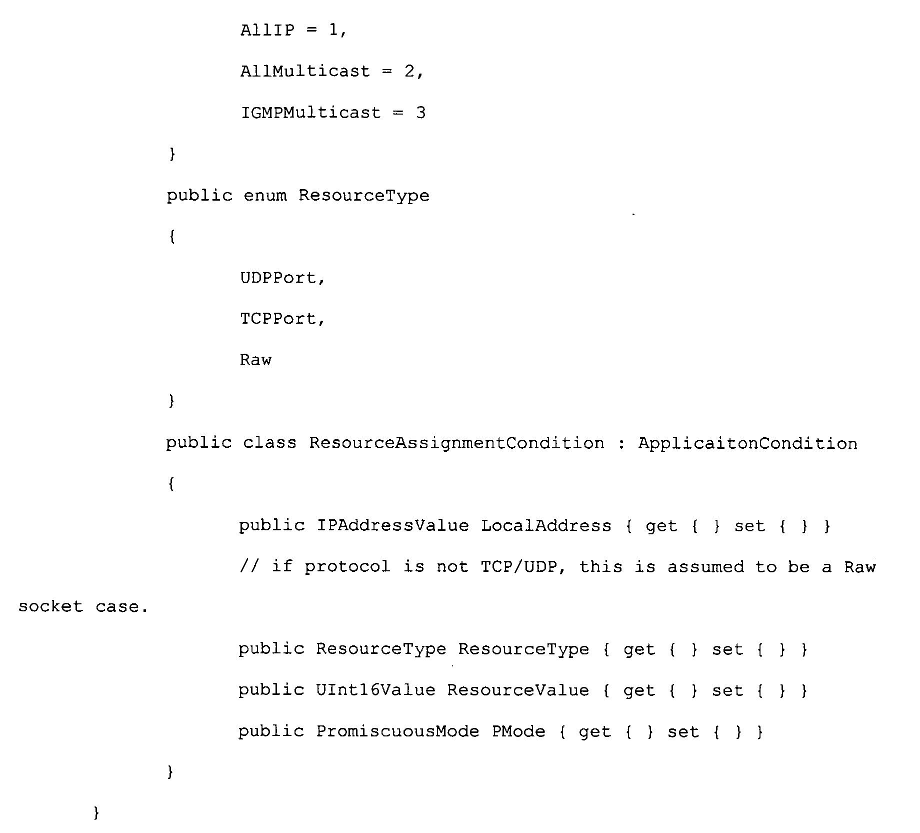

ApplicationCondition matches the conditions that are exposed by the application layer enforcement. This is the main engine for providing application and user based firewall policies.

| **Property** | |
|---|---|
| **Name** | Application |
| **Description** | This is to match packets that are generated / received by this application. |
| | |
| **Access** | Read/Write |

| **Property** | |
|---|---|
| **Name** | LocalUser |
| **Description** | This is to match packets that are generated / received by this user. |
| **Access** | Read/Write |

### EXHIBIT C

### System.Firewall.Policy.PolicyAction

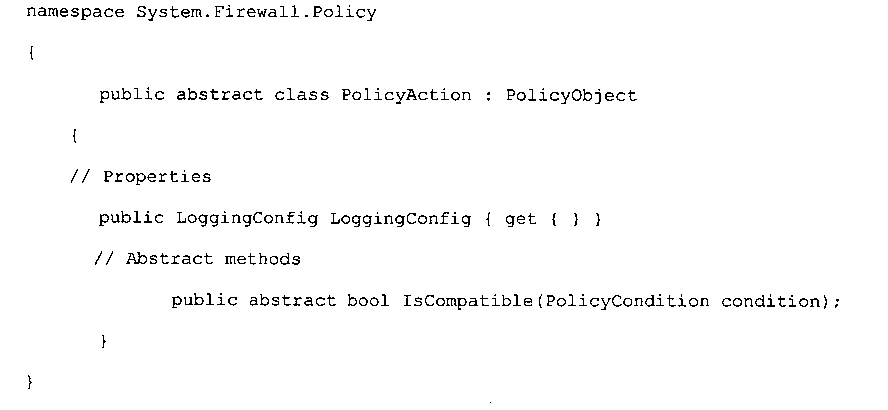

PolicyAction is an abstract class that serves as the root class for all specific action classes.
Whether to log the packet is implied by specifying a non-empty logging configure object.

### Methods

| **Method** | |
|---|---|
| **Name** | IsCompatible |
| **Return Type** | Bool |
| **Description** | Return true if this action can take place at the same layer as the condition. Otherwise return false. |
| **Parameters** | Condition - The condition against which this action will be checked. |

### System.Firewall.Policy.FilterAction

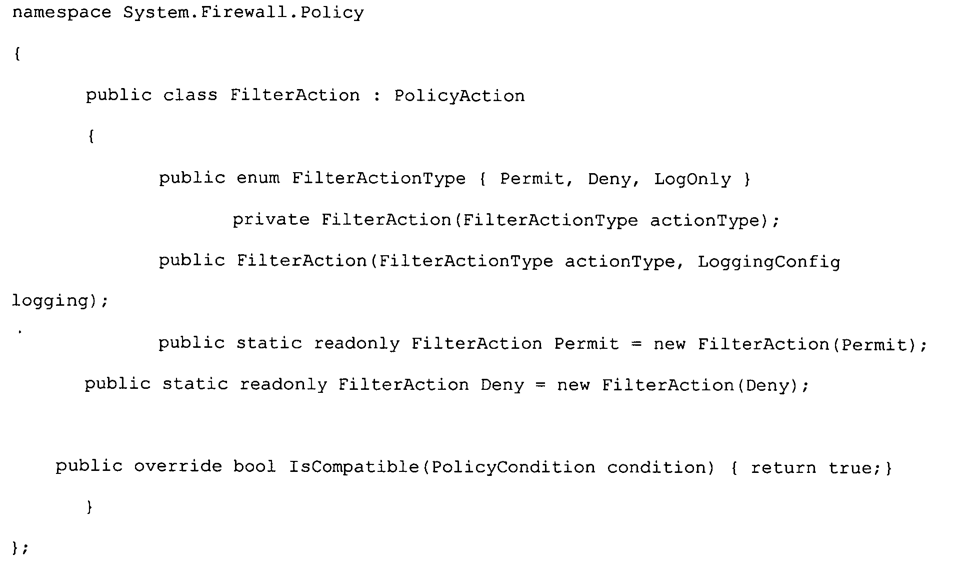

FilterAction models the following action scenarios:
- Permit: Allow packets that match the associating PolicyCondition object.
   PolicyAction action = FilterAction.Permit;
- Deny: Drop packets that match the associating PolicyCondition object.
   PolicyAction action = FilterAction.Deny;
- Permit and Log: Allow and log packets that match the associating PolicyCondition object.
   new
   FilterAction(FilterAction.FilterActionType.Permit, logging);
- Deny and Log: Drop and log packets that match the associating PolicyCondition object.
   new FilterAction(FilterAction.FilterActionType.Deny, logging);
- Log Only: Log packets that match the associating PolicyCondition object.
   new
   FilterAction(FilterAction.FilterActionType.LogOnly, logging);

Please note that FilterAction can be associated with any PolicyCondition as it is required that all layers in the firewall platform will at least support Permit, Deny and Log actions.

### System.Firewall.Policy.InstantiationTemplate

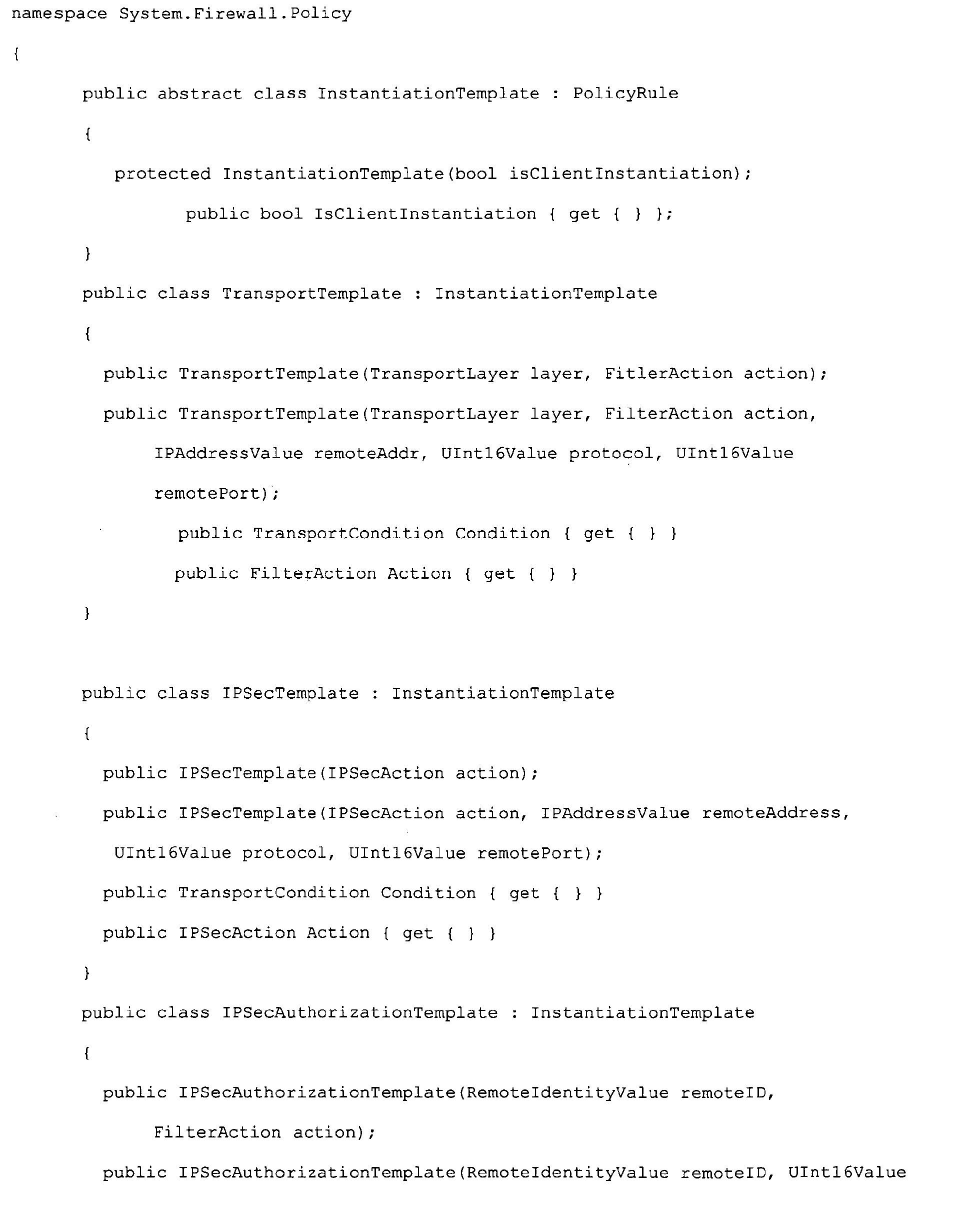

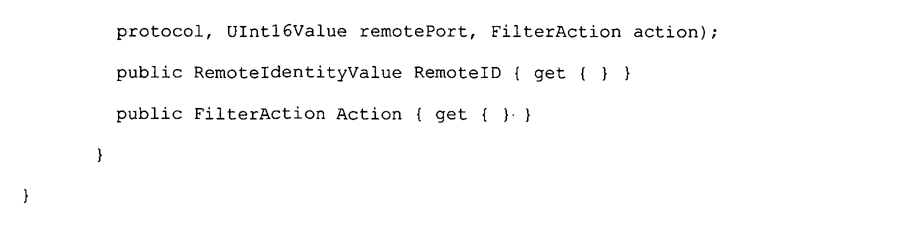

Instantiation templates can be any of the following templates:
- **TransportTemplate:** the template to be instantiated at the transport layer either inbound or outbound.
- **IPSecLayer:** the IPsec template to be instantiated at IPSec layer.
- **IPSec Authorization rule template:** the authorization template to be instantiated at the IPSec authorization layer.

Each of the above classes provide two constructors. The first one is to be instantiated when the associated application rule matched to perform client instantiation. When client instantiation takes place, the full 5-tuple is available to instantiate the template. On the other hand, if it is not a client instantiation, only local 3-tuple, i.e. local address, protocol, and local port, available. This is what the second constructor will be used for. So implicitly, the first constructor set the isClientInstantiation flag in the base InstantiationTemplate class to be true while the second one set it to false. The client instantiation templates are instantiated only when the full 5-tuple is available while the server instantiation templates only at the time when the local 3-tuple is available.

### System.Firewall.Policy.ApplicationAction

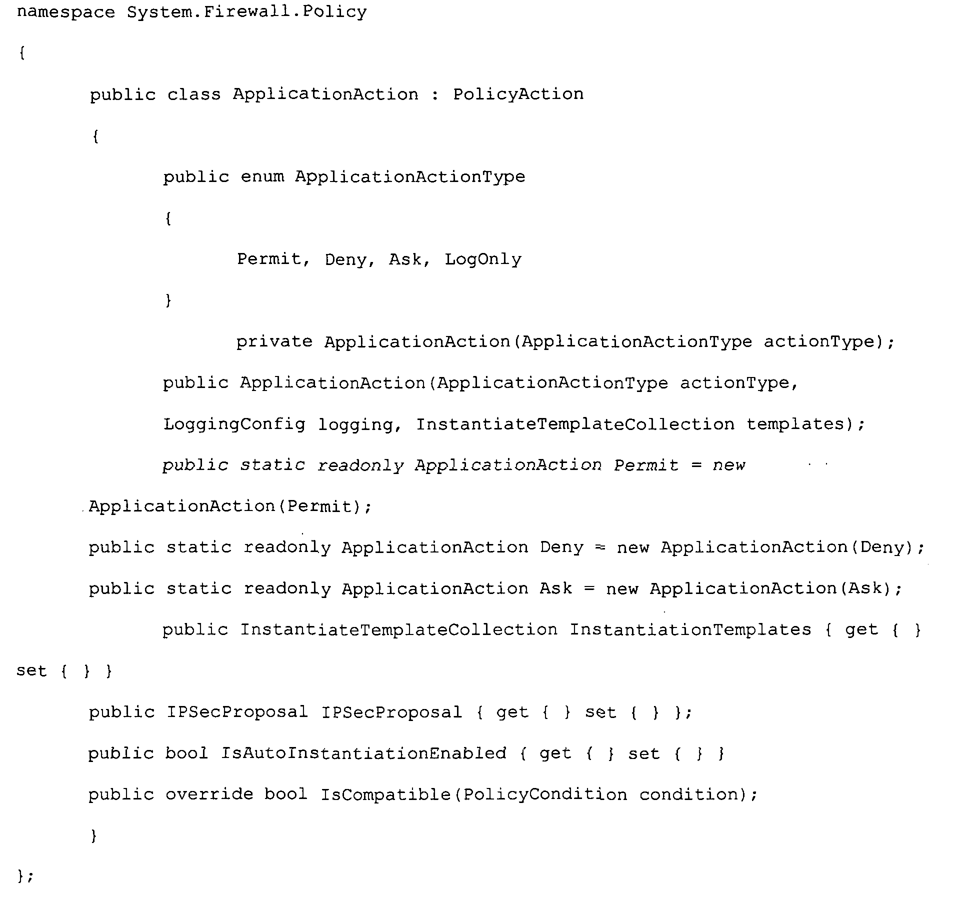

*The possible ApplicationAction scenarios are as following:*
- **Permit:** Allow packets that match the associating ApplicationCondition object.
- **Deny:** Drop packets that match the associating ApplicationCondition object.
- **Ask:** Ask for users' decisions when packets match the associating ApplicationCondition object.
- **Log Only:** Log packets that match the associating ApplicationCondition object.

### Methods

| **Method** | |
|---|---|
| **Name** | GetTemplates |
| **Return Type** | InstantiateTemplateCollection |
| **Description** | Return the list of instantiate templates that will be created when this application action takes place. |
| **Parameters** | Condition - The condition against which this action will be checked. |

### System.Firewall.Policy.CalloutAction

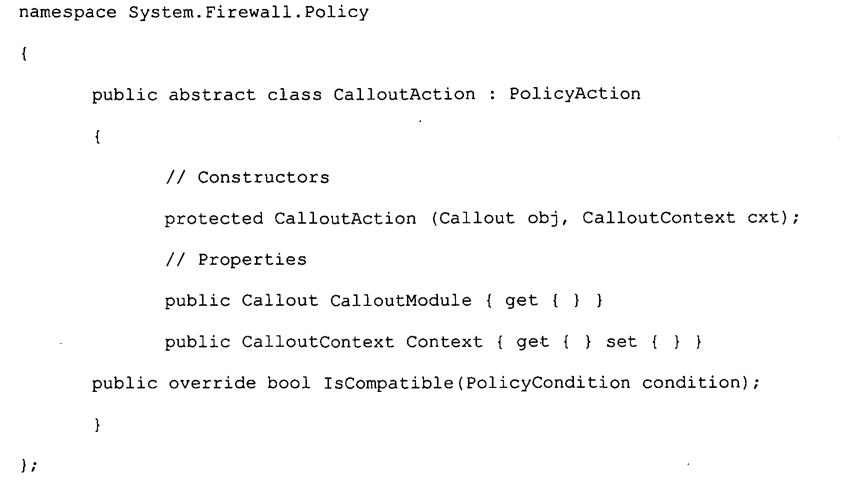

CalloutAction models the callout extensions that the platform provides. When associating conditions are matched, the callout action specifies the callout extension that the platform needs to invoke. It is used as an extension mechanism to provide additional security functionalities like intrusion detection, parental control etc.

| **Property** | |
|---|---|
| **Name** | CalloutModeul |
| **Description** | The callout module to be invoked when the associating condition is matched. |
| **Access** | Read Only |

| **Property** | |
|---|---|
| **Name** | CalloutContext |
| **Description** | The callout specific context information to be passed to the callout module when it is invoked. |
| **Access** | Read/Write |

### System.Firewall.Policy.IPSecAction

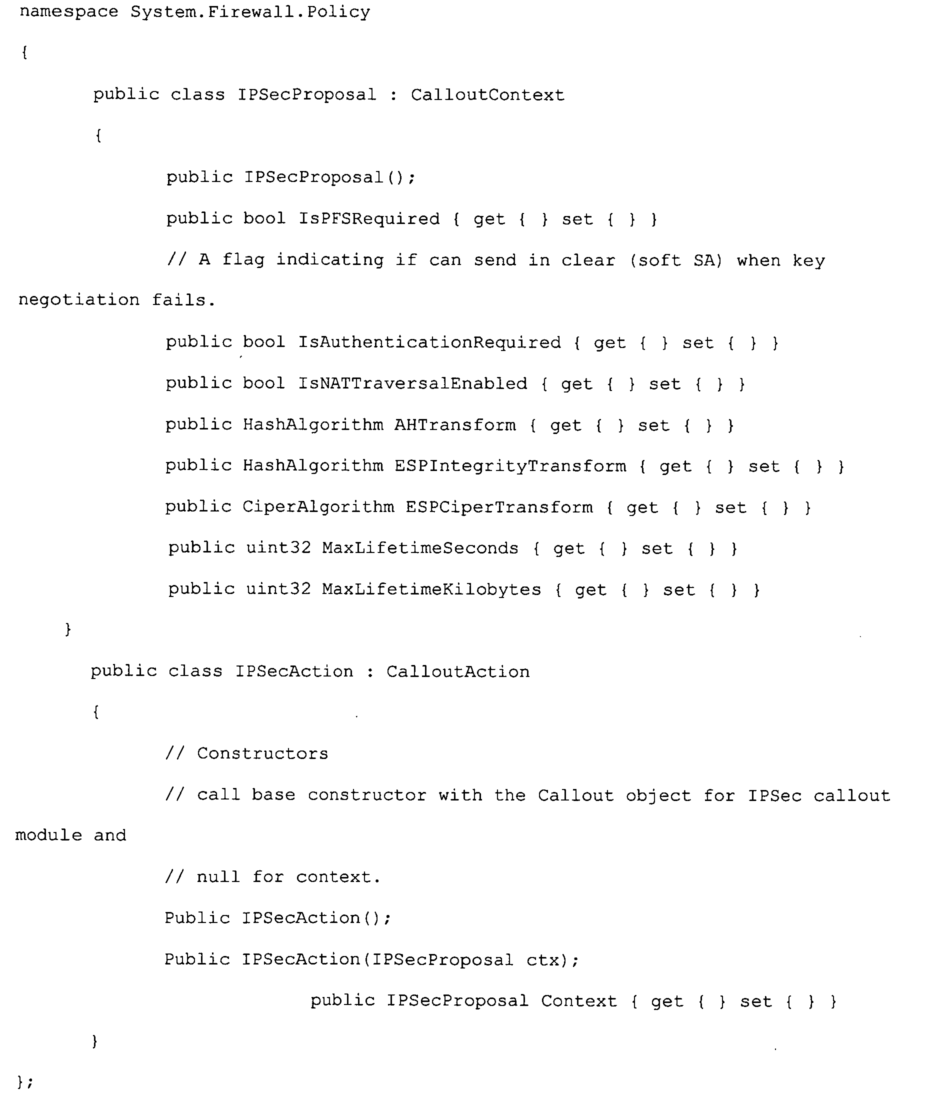

IPSecAction triggers the IPSec callout to set a security context in the matching packets so that the packets will be further process by the IPSec driver. It also specifies the actual IPSec configure parameters for securing network traffic, including AH or ESP or both and their corresponding transform settings.

### System.Firewall.Policy.IKEAction

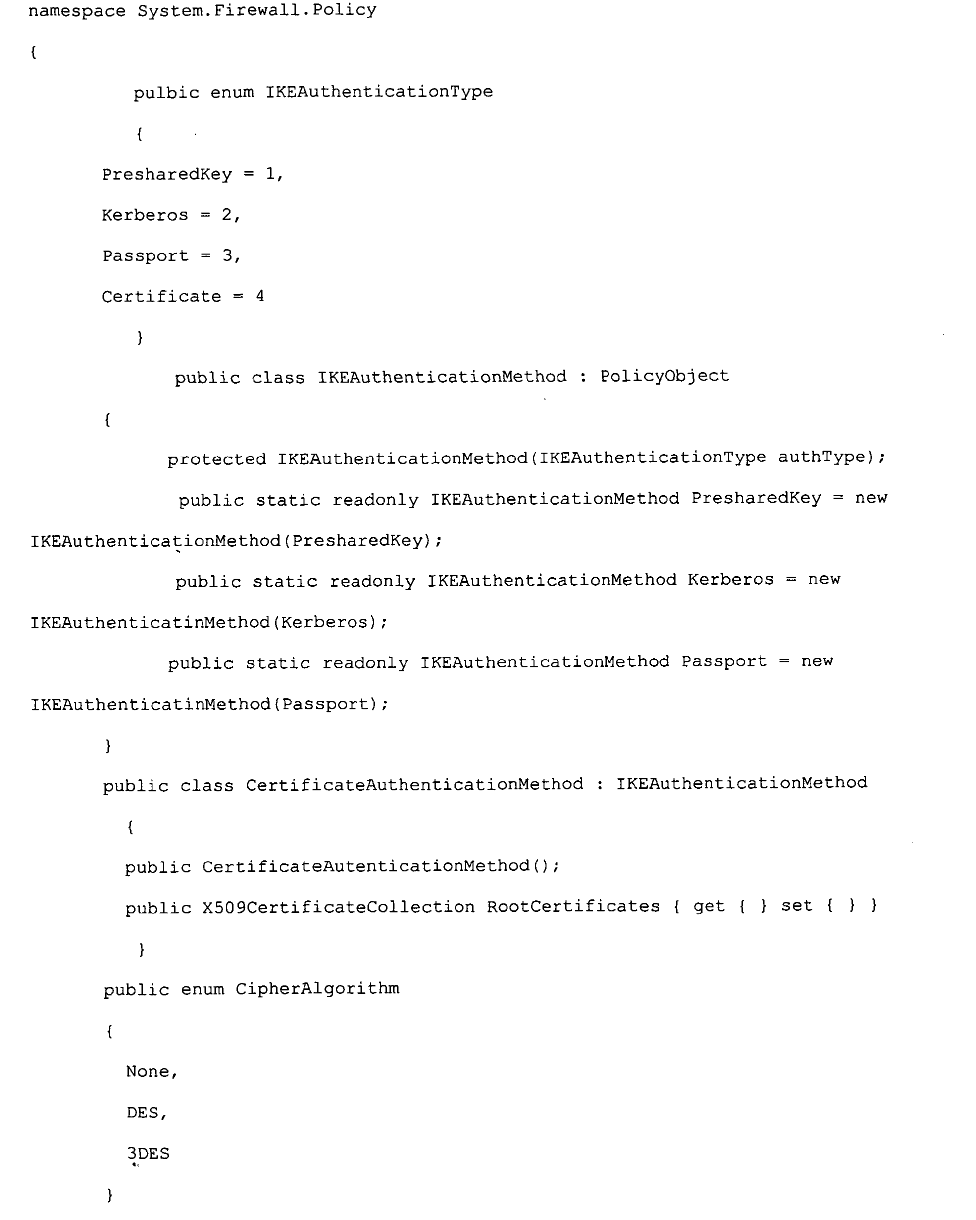

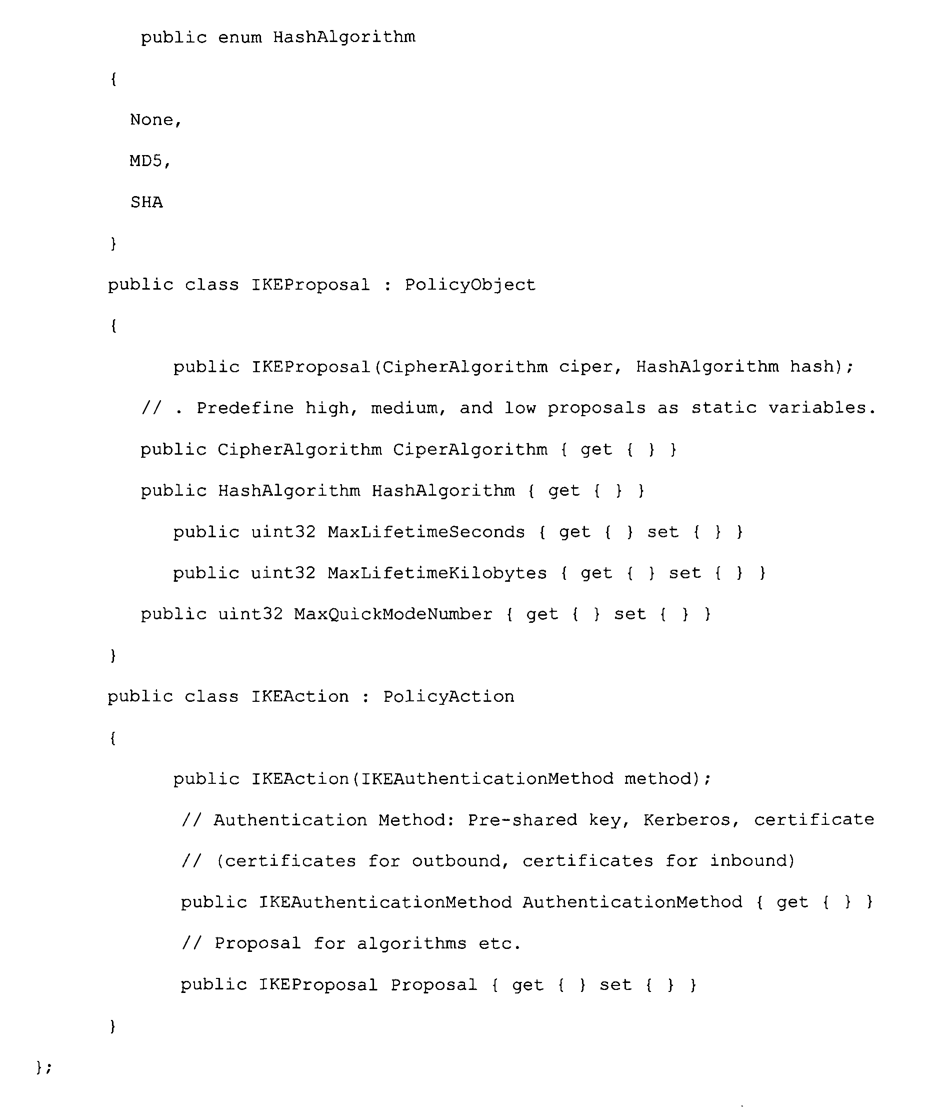

IKEAction defines the authentication methods for performing IKE key negotiation protocol, which can be either pre-shared key, Kerberos or certificates, and also proposals for authentication algorithms.

### System.Firewall.Policy.KeyingModuleAction

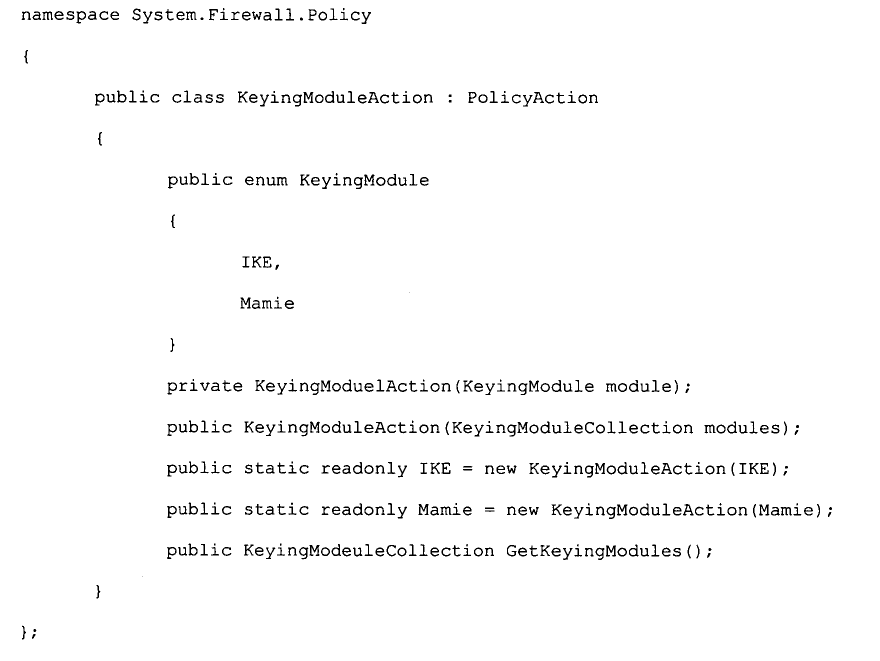

KeyingModuleAction selects the specified keying module to perform key negotiation exchanges. When more than one is specified, each of the listed keying modules will be tried in order until one of them succeeds or all have failed.

### Methods

| **Method** | |
|---|---|
| **Name** | GetKeyingModules |
| **Return Type** | KeyingModuleCollection |
| **Description** | Return one or more keying modules that may be invoked when this action is taken place. If more than one keying modules are listed, they will be tried in the order as specified until one of them succeeds or all fail. |
| | |
| **Parameters** | None. |

### Exhibit D

### System.Firewall.Policy.ApplicationSetting

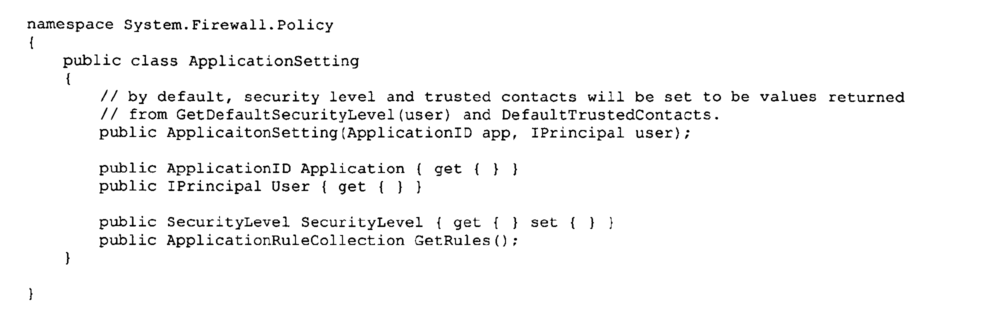

| **Property** | |
|---|---|
| **Parameters** | Application |
| **Description** | The application for which this application setting is about. |
| **Access** | Read Only |

| **Property** | |
|---|---|
| **Parameters** | User |
| **Description** | The user for which this application setting is specified. Together with the application field, it serves as the unique key for application settings. |
| **Access** | Read Only |

| **Property** | |
|---|---|
| **Parameters** | SecurityLevel |
| **Description** | The security level when this user uses this application. |
| **Access** | Read Write |

| **Method** | |
|---|---|
| **Name** | GetRules |
| **Parameters** | Application - The application to which this security level is to be applied. |
| | User - The user to which this security level is to be applied. |
| | Contacts - The list of remote contacts that is used when this security level is applied. |
| **Returns** | ApplicationRuleCollection |
| **Description** | Obtain the list of application rules that enforces the setting "using this security level with these remote contacts when this user uses this application". |

### System.Firewall.Policy.SecurityLevel

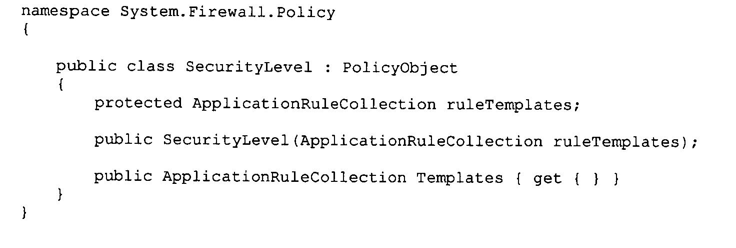

| **Property** | |
|---|---|
| **Parameters** | Templates |
| **Description** | The list of application rule templates that make of this security level. |
| **Access** | Read Only |

The reference of remote entities in a security level determines the setting for IPSec main mode key exchange. For example, if a trusted contact is an X509 certificate, the CA certificate for this contact will be treated as a trusted root certificate used in IKE negotiation. For the security reason, certificates, pre-shared keys and other credentials will be not stored by the PFW service. Instead the should come from the dedicated windows security stores e.g. secure certificate store for certificates.

### Exhibit E

### System.Firewall. FirewallService

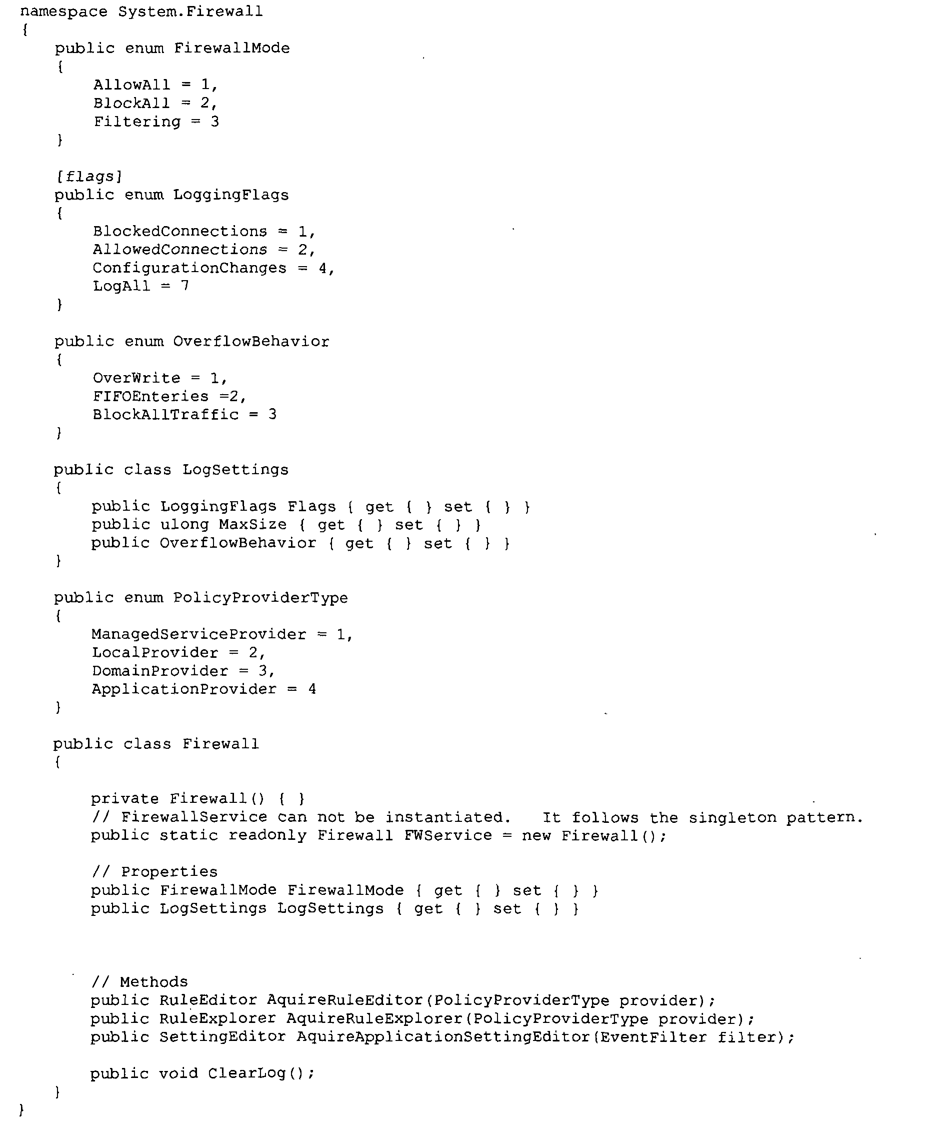

### Properties

| **Property** | |
|---|---|
| **Parameters** | FirewallMode |
| **Description** | The current filtering mode of the personal firewall service. It can be any of the following value: |
| | • Block All: the personal firewall service is running and it is blocking all traffic |
| | • Permit All: the personal firewall service is running and it is allowing all traffic |
| | • Filtering: the personal firewall service is running and it is actually enforcing the application settings that users have defined. |
| **Access** | Read Write |

| **Property** | |
|---|---|
| **Parameters** | LogSettings |
| **Description** | A global setting that specifies the logging settings including things to log, logging limit and over flow behavior. |
| **Access** | Read Write |

### Methods

| **Method** | |
|---|---|
| **Name** | AquireRuleEditor |
| **Parameters** | Provider - The type policy provider that the returned policy editor will act as. |
| **Returns** | RuleEditor - an object reference through which all advanced policy rules will be managed. |
| | The principal of the current calling thread will be used in permission checking. So in a 'runas' situation, the impersonation needs to take place before calling this method to create a RuleEditor. An insufficient privilege exception will be raised if the current caller does not have sufficient privileges. |
| **Description** | The policy provider interface for manipulating policy rules directly, i.e. the advanced view of rules in the system including those stored in the persistent store and plumbed down to the kernel driver. |

| **Method** | |
|---|---|
| **Name** | AquireRuleExplorer |
| **Parameters** | Provider - The type policy provider that the returned policy explorer will act as. |
| **Returns** | RuleExplorer - an object reference through which rules from other providers may be retrieved with sufficient privileges. |
| **Description** | Creation of a rule explorer object for viewing rules that are currently enforced in the platform by a specific policy provider. |

| **Method** | |
|---|---|
| **Name** | AquireSettingEditor |
| **Parameters** | Provider - The type policy provider that the returned firewall setting editor will act as. |
| **Returns** | SettingEditor - an object reference through which all simple application settings will be managed. |
| | The principal of the current calling thread will be used in permission checking. So in a 'runas' situation, the impersonation needs to take place before calling this method. An insufficient privilege exception will be raised if the current caller does not possess sufficient privileges. |
| **Description** | Creation of an editor object for managing simple views of rules in terms of application settings. |

| **Method** | |
|---|---|
| **Name** | ClearLog |
| **Parameters** | Void |
| **Returns** | Void |
| **Description** | Remove all records in the log. |

### System.Firewall.SettingEditor

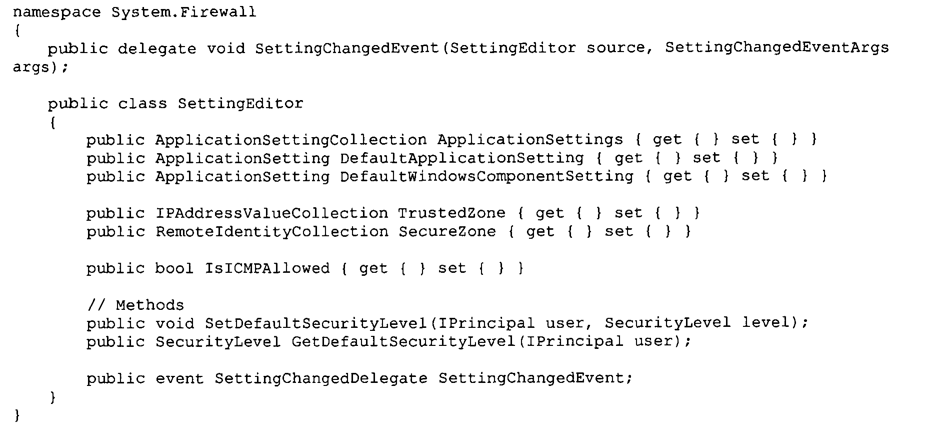

### Properties

| **Property** | |
|---|---|
| **Parameters** | ApplicationSettings |
| **Description** | All the application firewall rules stored in the system. |
| **Access** | Read Only |

| **Property** | |
|---|---|
| **Parameters** | DefaultApplicationSetting |
| **Description** | The default firewall setting to apply when an application's setting is not specified. |
| **Access** | Read Write |

| **Property** | |
|---|---|
| **Parameters** | DefaultWindowsServiceSetting |
| **Description** | The default firewall setting to apply when a windows service's firewall setting is unspecified |
| **Access** | Read Write |

| **Property** | |
|---|---|
| **Parameters** | TrustedZone |
| **Description** | The default trusted IP address list to use when an application setting does not specify its own trusted IP addresses. |
| **Access** | Read Write |

| **Property** | |
|---|---|
| **Parameters** | SecureZone |
| **Description** | The default trusted authenticated remote identity list to use when an application setting does not specify its own trusted authenticated remote identities. |
| **Access** | Read Write |

| **Property** | |
|---|---|
| **Parameters** | IsICMPAllowed |
| **Description** | If true, all ICMP messages are allowed e.g. the stack will respond to pings and generate ICMP errors. Otherwise, it is blocked. |
| **Access** | Read Write |

### Methods

| **Method** | |
|---|---|
| **Name** | SetDefaultSecurityLevel |
| **Parameters** | User - |
| | Level - |
| **Returns** | Void |
| **Description** | Set the default security level for the specified user. |

| **Method** | |
|---|---|
| **Name** | GetSecurityLevel |
| **Parameters** | User - |
| **Returns** | Void |
| **Description** | Get the default security level for the specified user. |

### System.Firewall.RuleExplorer

A RuleExplorer object gives a firewall client the read-only view of all the policies that are currently in the firewall platform (subject to privilege checking though).

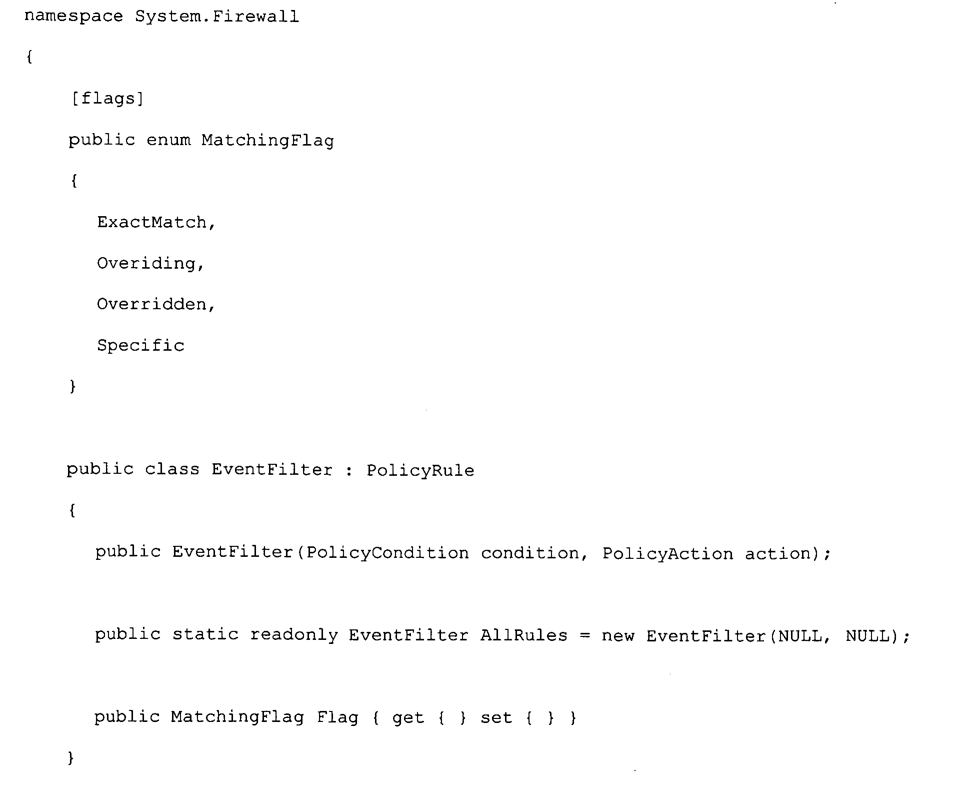

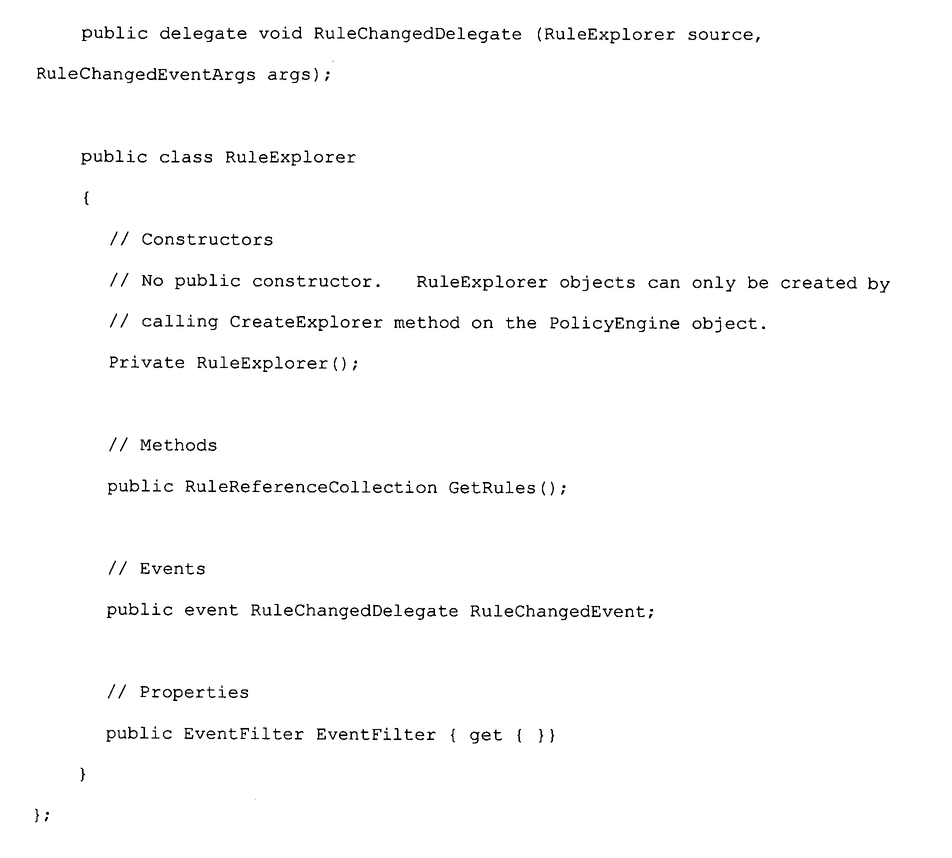

### Methods

| **Method** | |
|---|---|
| **Name** | GetRules |
| **Return Type** | RuleReferenceCollection |
| **Description** | Obtain rules that are currently enforced in the firewall platform. The operation is done in one transaction, i.e. it is an atomic operation with the proper isolation level. |
| **Parameters** | None. |

### Events

| **Property** | |
|---|---|
| **Name** | RuleChangedEvent |
| **Description** | This is for the RuleExplorer client to receive notification when the policies that it is views have changed. |
| **Parameters** | Source - the specific RuleExplorer object whose policies that it's viewing have changed |
| | Args - the RuleChangedEventArgs consist of the list of policies that have changed in the form of RuleReferenceCollection object. |

### System.Firewall.RuleEditor

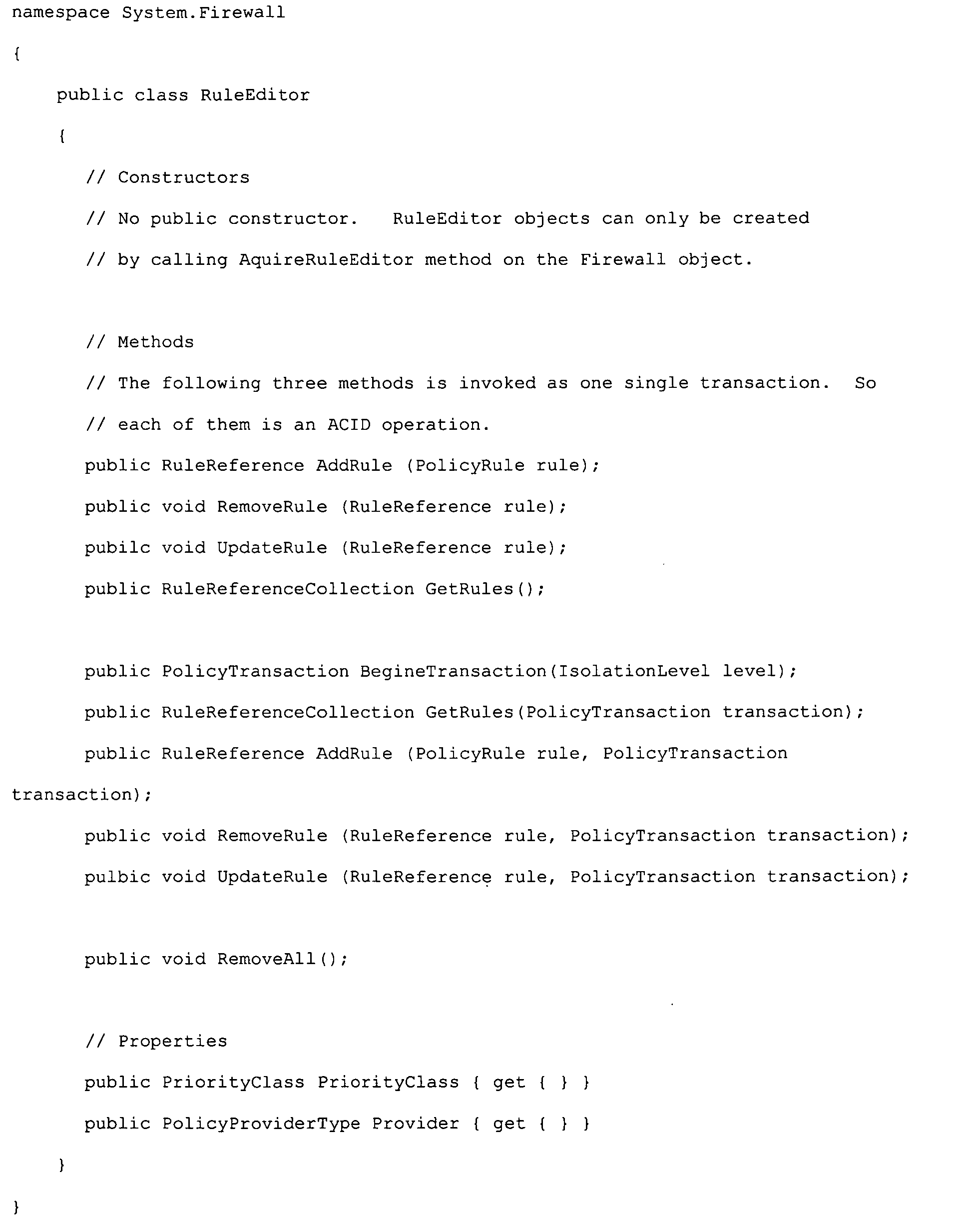

### Methods

| **Method** | |
|---|---|
| **Name** | AddRule |
| **Return Type** | RuleReference |
| **Description** | Push down a set of policies to the policy engine which in turn plumb them down to the kernel driver. |
| **Parameters** | Policy - a new policy to be plumbed down to the firewall platform driver |
| **Exceptions** | ArgumentException: when try to add an invalid PolicyRule object |
| | PrivilegeException: when try to add a rule with insufficient privileges. |
| | TransactionException: when the current transaction is aborted because of transaction time out. |

| **Method** | |
|---|---|
| **Name** | RemoveRule |
| **Return Type** | Void |
| **Description** | Remove the specified policy from the firewall platform enforcement |
| **Parameters** | Policy -policy to be removed from the firewall platform driver |
| **Exceptions** | PrivilegeException: when try to remove a rule with insufficient privileges. |
| | TransactionException: when the current transaction is aborted because of transaction time out. |

| **Method** | |
|---|---|
| **Name** | UpdateRule |
| **Return Type** | void |
| **Description** | Change the specified policy that has been previously added. |
| **Parameters** | Policy - policy that need to be changed |
| **Exceptions** | ArgumentException: when try to set an invalid PolicyRule object |
| | PrivilegeException: when try to add a rule with insufficient privileges. |
| | TransactionException: when the current transaction is aborted because of transaction time out. |

| **Method** | |
|---|---|
| **Name** | RemoveAll |
| **Return Type** | void |
| **Description** | Remove all the rules that this policy provider has created. It is an atomic operation i.e. it is done within one transaction. |
| **Parameters** | Policy - policy that need to be changed |
| **Exceptions** | PrivilegeException: when try to add a rule with insufficient privileges. |
| | TransactionException: when the current transaction is aborted because of transaction time out or the transaction has failed. |

### Properties

| **Property** | |
|---|---|
| **Name** | PriorityClass |
| **Description** | The priority class that this policy provider is in. |
| **Access** | Read Only |

### System.Firewall. PolicyTransaction

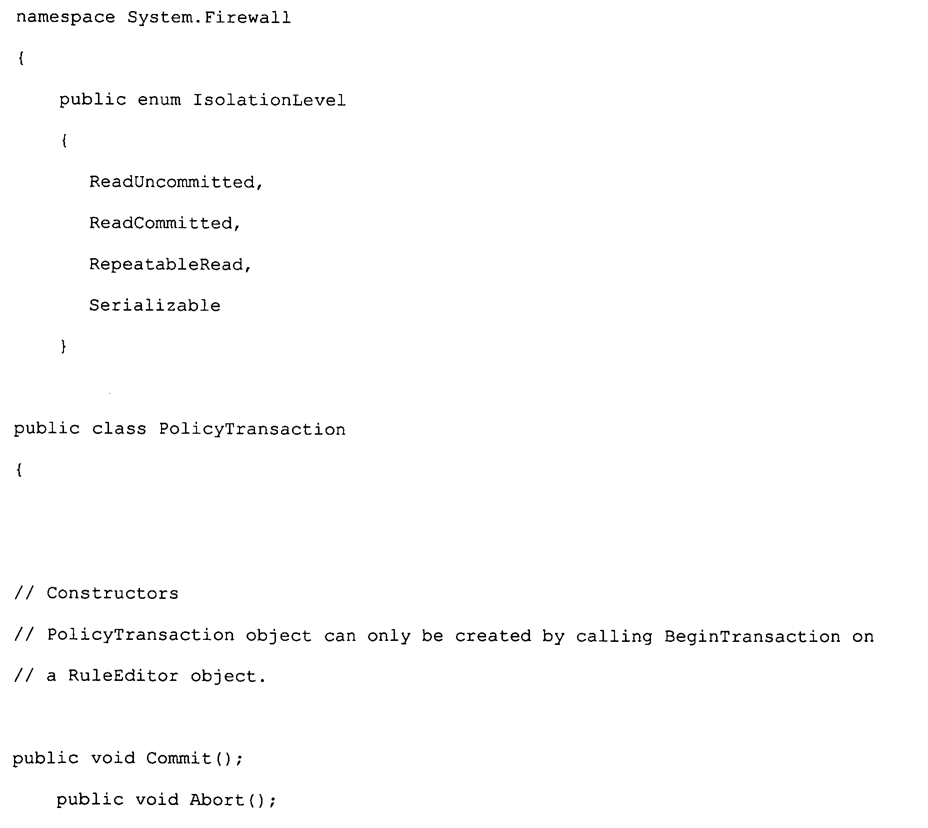

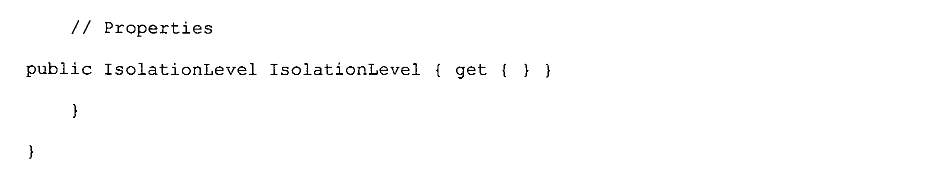

The current firewall platform only supports one phase commit for policy transactions. For each transactional operation like read/add/update/remove rules, some locks will be held till the transaction ends i.e. either committed or aborted. Considering the fact that it is less common.to have multiple explorers and editors try to access the policy engine concurrently, a coarse grained concurrency control schemes using a global engine lock is currently used. So only isolation level **Serializable** is currently supported.

To prevent deadlock or starvation, each transaction is associated with a time out interval. If there are any other transactions waiting for the current transaction to finish, the current transaction will be aborted by the platform if it does not end before the times out interval expires. If the transaction is aborted because of time out, the next transactional operations like calling AddRule on RuleEditor or Commit on PolicyTransaction will raise a TransactionException.

Rule validation and access permission checking are done at the time when the policy operations are invoked e.g. calling GetRules on a RuleExplorer object or UpdateRule on a RuleEditor. But changes will not take effect until the transaction that they are in is committed. The policy engine will take all the changes as one batch and apply them atomically to the kernel model firewall driver.

### Methods

| **Method** | |
|---|---|
| **Name** | Commit |
| **Return Type** | Void |
| **Description** | Perform this policy transaction. |
| **Parameters** | None |
| | |
| **Exceptions** | TransactionException: When this policy transaction fails to commit due to some unexpected causes like running out memory. |

| **Method** | |
|---|---|
| **Name** | Abort |
| **Return Type** | void |
| **Description** | Abort the specified transaction. |
| **Parameters** | None. |
| **Exceptions** | TransactionException: When the platform fails to roll back changes made by this transaction. |

### Properties

| **Property** | |
|---|---|
| **Name** | IsolationLevel |
| **Description** | The isolation level that this transaction object is at. There are four possible isolation levels: |
| | |
| | **• ReadUncommitted:** Uncommitted changes in one transaction can be viewed from other transactions. |
| | |
| | **• ReadCommmitted:** Changes in one transaction can be viewed from other transactions only after they have been committed. |
| | |
| | **• RepeatableRead:** At this isolation level it is guaranteed that any rule that has been read will not change during the whole transaction, but other transactions may add new rules which subsequent reads in this transaction will return. |
| | |
| | **• Serializable:** All concurrent transactions interact only in ways that produce the same effect as if each transaction were executed one after another. |
| | |
| | The current firewall platform only support isolation level of **Serializable**. The support for other levels may be added in the future. |
| **Access** | Read Only |

### System.Firewall.RuleReference

Each RuleReference has one corresponding RuleEditor that owns it. Only that RuleEditor will be able to modify this object.

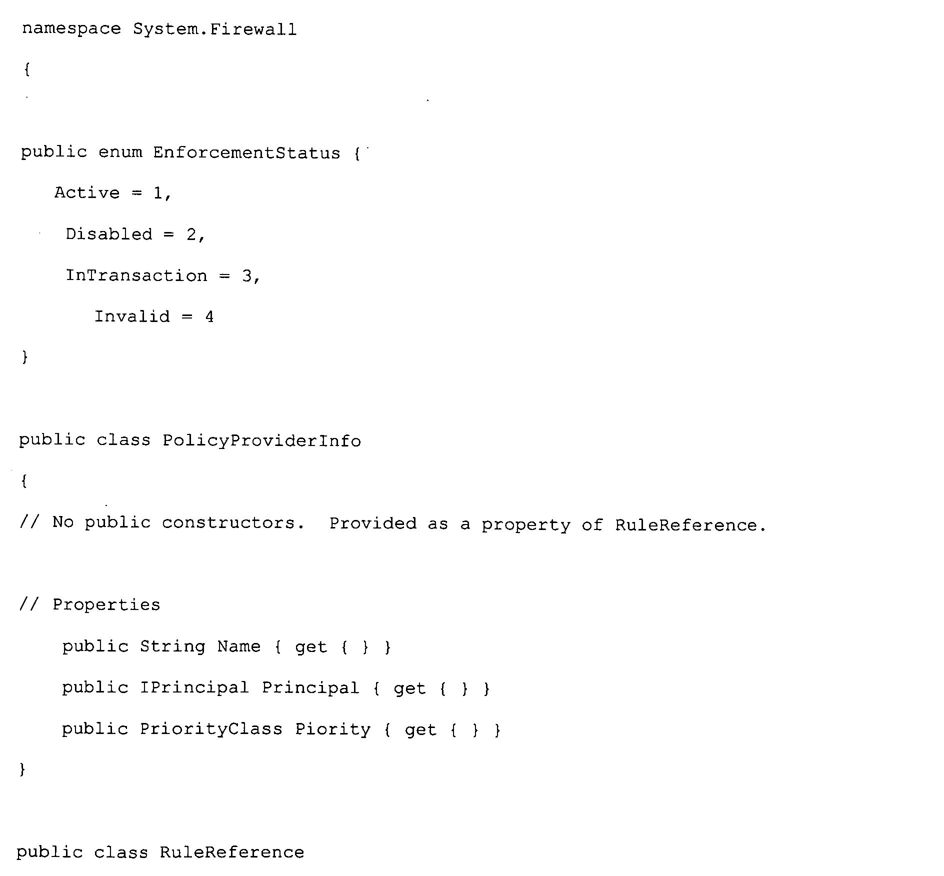

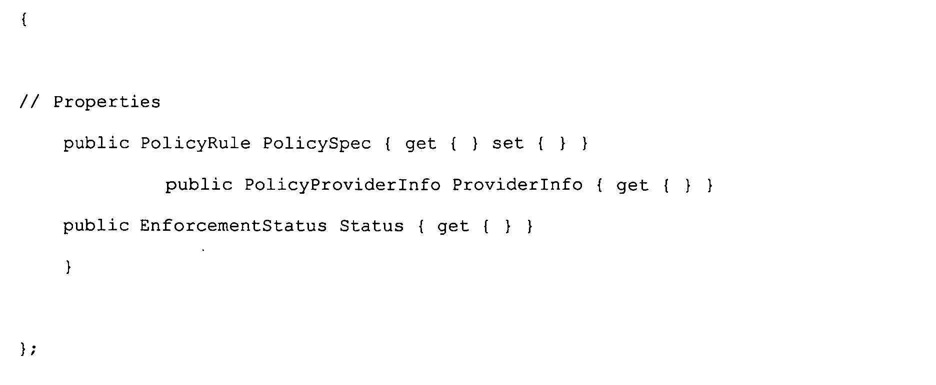

### Properties

| **Property** | |
|---|---|
| **Name** | Spec |
| **Description** | The actual content of the policy that is to be or being enforced by the underlying firewall platform components. |
| **Access** | Read/Write |

| **Property** | |
|---|---|
| **Name** | Status |
| **Description** | The enforcement status of this policy, which can be in one of the following state: |
| | - **Active:** Committed to the policy manager successfully and it is placed on the active list and being enforced. |
| | - **Disabled:** Committed to the policy manager successfully but due to a complete block by other high priority policies, or because either the location or time constraints are not met, it is currently on the disabled rule list. |
| | - **InTransaction:** Valid policy specification and it is in a transaction to be committed to the policy manager |
| | - **Invalid:** Invalid policy specification and not committed. |
| **Access** | Read Only |

| **Property** | |
|---|---|
| **Name** | ProviderInfo |
| **Description** | The information about the provider who owns this policy |
| **Access** | Read Only |

## Claims

1. A method for setting firewall policy for an application, comprising:
receiving a first parameter comprising information about an application;
receiving a second parameter comprising information about a user of the application;
accessing security level information relating to the first and second parameters; and
setting a firewall policy for the application and the user utilizing the security level information.

2. The method of claim 1, wherein accessing security level information comprises calling a GetRules method to return rule templates available for the application and user.

3. The method of claim 1, further comprising, receiving a third parameter regarding trusted contacts, and wherein setting a firewall policy comprises setting the firewall policy for the application and the user and the trusted contacts utilizing the security level information.

4. The method of claim 1, wherein setting the firewall policy comprises:
setting a default setting for the application; and
selecting the default setting for the user.

5. A computer-readable medium having stored thereon a data structure, the data structure comprising;
a first data field representing an application;
a second data field representing a user of the application; and
a third data field representing available security settings for the user utilizing the application.

6. The computer-readable medium of claim 5, wherein the data structure comprises a data object.

7. An object model for managing a service on a computer, the object model comprising:
a policy object model used to specify one or more policies that the service supports; and
a policy engine platform for interacting with said one or more policies for the service and at least one component that actually performs the service, and to provide said one or more policies to said at least one component.

8. The object model of claim 7, wherein the policy engine platform comprises a rule editor for adding an additional policy in accordance with the policy object model.

9. The object model of claim 8, wherein the rule editor is also configured to delete a policy.

10. The object model of claim 8, wherein the rule editor is also configured to edit a policy.

11. The object model of claim 7, wherein the policy engine platform comprises a setting editor configured to automatically generate a policy based upon an application and user combination.

12. The object model of claim 11, wherein the setting editor generates a plurality of policies, and is further configured to permit a user to select from the plurality.

13. The object model of claim 12, wherein the setting editor is further configured to permit setting one of the plurality as a default policy.

14. The object model of claim 7, wherein the policy engine platform comprises a rule explorer for providing a view of the one or more policies.

15. The object model of claim 7, wherein the policy object model comprises a policyrule object usable to generate policy, the policyrule object comprising a condition property and an action property, wherein a policy generated by the policyrule object is configured to perform an action in the action property responsive to a condition in the condition property being met.

16. The object model of claim 7, wherein the service is a firewall service.

17. The object model of claim 7, wherein the policy engine platform is configured to deny providing said one or more policies to the component if a requestor is not authorized.

18. The object model of claim 17, wherein determining whether a requestor is authorized comprises comparing a provider rank for the requestor against a permitted rank, and if the provider rank for the requestor does not meet or exceed the permitted rank, denying the requestor.

19. A method of managing a service on a computer, the method comprising:
specifying, via a policy object model, one or more policies that the service supports; and
interacting, via a policy engine platform, with said one or more policies for the service and at least one component that actually performs the service; and
providing, via the policy engine platform, said one or more policies to said at least one component.

20. The method of claim 19, further comprising automatically generating a policy based upon an application and user combination.

21. The method of claim 20, further comprising generates a plurality of policies, and permitting a user to select from the plurality.

22. The method of claim 21, further comprising setting one of the plurality as a default policy.

23. The method of claim 22, further comprising authorizing a user prior to providing.

24. An object model for managing a firewall service on a computer, the object model comprising a policy object model used to specify one or more policies that the firewall service supports, the policy model comprising a policyrule object usable to generate policy, the policyrule object comprising a condition property and an action property, wherein a policy generated by the policyrule object is configured to perform an action in the action property responsive to a condition in the condition property being met.

25. The object model of claim 24, further comprising an IPSecRule derived from the policyrule object, the IPSecRule being configured to trigger an IPSec callout when an IPSec condition is matched, and to indicate configuration parameters for securing traffic related to the callout.

26. The object model of claim 25, wherein the IPSecRule evaluates a standard 5-tuple to determine if a condition has been met.

27. The object model of claim 24, further comprising a KeyingModuleRule derived from the policyrule object, the KeyingModuleRule being configured to select which key negotiation module to use when there is no existing secure channel to a remote peer.

28. The object model of claim 27, wherein the KeyingModuleRule evaluates a standard 5-tuple to determine if a condition has been met.

29. The object model of claim 24, further comprising a IKERule derived from the policyrule object and configured to specify the parameters for carrying out Internet Key Exchange key negotiation protocol.

30. The object model of claim 29, wherein the IKERule evaluates a local address and a remote address to determine if a condition has been met.

31. The object model of claim 29, wherein the IKERule comprises an IKEAction action property that defines the authentication methods for performing Internet Key Exchange key negotiation protocol.
